# EUROPEAN PATENT APPLICATION

(11) **EP 4 742 641 A2**
(43) Date of publication of application: **13.05.2026**
(21) Application number: 25214944.8
(22) Date of filing: 08.09.2023
(51) Int. Cl.: H04M 1/02

(54) **ROTATING MECHANISM AND FOLDABLE ELECTRONIC DEVICE**

(30) Priority: 20.09.2022 CN 202211145993
(62) Divisional of application: 23867311.5
(71) Applicant: Honor Device Co., Ltd., Shenzhen, Guangdong 518040 (CN)
(72) Inventor: CHEN, Ruihao, Shenzhen, 518040 (CN); DONG, Shaohong, Shenzhen, 518040 (CN); PENG, Gaofeng, Shenzhen, 518040 (CN); SU, Shuai, Shenzhen, 518040 (CN); HUANG, Jian, Shenzhen, 518040 (CN)
(74) Representative: Isarpatent

(57) **Abstract**

This application provides a rotating mechanism and a foldable electronic device. The rotating mechanism includes a fixed base, a first synchronization swing arm, a second synchronization swing arm, and a synchronization gear. A first gear, an intermediate gear, and a second gear of the synchronization gear are all helical gears, the first gear, the intermediate gear, and the second gear are disposed side by side and in parallel, and the intermediate gear is located between the first gear and the second gear and engages with the first gear and the second gear. The first synchronization swing arm is fastened to the first gear, and the second synchronization swing arm is fastened to the second gear. The synchronization gear is mounted in the fixed base and is rotatably connected to the fixed base, the first synchronization swing arm and the second synchronization swing arm are respectively located on two opposite sides of the fixed base in a width direction, a rotation direction of the first synchronization swing arm is opposite to a rotation direction of the second synchronization swing arm, and a rotation direction of the first gear is opposite to a rotation direction of the second gear. The rotating mechanism provided in this application can resolve a technical problem of poor transmission stability of a rotating mechanism in the conventional technology.

## Description

This application claims priority to Chinese Patent Application No. 202211145993.2, filed with the China National Intellectual Property Administration on September 20, 2022 and entitled "ROTATING MECHANISM AND FOLDABLE ELECTRONIC DEVICE", which is incorporated herein by reference in its entirety.

### TECHNICAL FIELD

This application relates to the field of electronic product technologies, and in particular, to a rotating mechanism and a foldable electronic device.

### BACKGROUND

With the development of science and technologies, an appearance (ID) form of an electronic device (such as a cellphone or a tablet computer) tends to develop from a bar-type machine to a foldable machine. The foldable machine has a large-area screen in an open state and therefore fully meets visual experience of a consumer; and has a small volume in a closed state and therefore is easy to carry. Most foldable machines in the conventional technology implement synchronous movement through synchronization gears in synchronization mechanisms. However, most existing synchronization gears are in spur tooth structures and therefore have poor transmission stability.

### SUMMARY

This application provides a rotating mechanism and a foldable electronic device, to resolve a technical problem of poor transmission stability of a rotating mechanism in the conventional technology.

According to a first aspect, this application provides a rotating mechanism, including a fixed base, a first synchronization swing arm, a second synchronization swing arm, and a synchronization gear. The synchronization gear includes a first gear, a second gear, and an intermediate gear. The first gear, the intermediate gear, and the second gear are all helical gears. The first gear, the intermediate gear, and the second gear are disposed side by side and in parallel. The intermediate gear is located between the first gear and the second gear and engages with the first gear and the second gear. The first synchronization swing arm is fastened to the first gear, and the second synchronization swing arm is fastened to the second gear. The synchronization gear is mounted in the fixed base and is rotatably connected to the fixed base. The first synchronization swing arm and the second synchronization swing arm are respectively located on two opposite sides of the fixed base in a width direction. A rotation direction of the first synchronization swing arm is opposite to a rotation direction of the second synchronization swing arm. A rotation direction of the first gear is opposite to a rotation direction of the second gear.

The rotating mechanism is applied to a foldable electronic device, and the foldable electronic device includes a first housing, a second housing, and a display screen. The first housing is connected to the first synchronization swing arm, and the second housing is connected to the second synchronization swing arm. The rotating mechanism is located between the first housing and the second housing and enables the first housing to be rotatably connected to the second housing. Rotation of the rotating mechanism can drive the first housing and the second housing to rotate relative to each other. Accommodation grooves are further disposed in the first housing and the second housing. The accommodation grooves are configured to accommodate electronic components such as a processor, a circuit board, and a camera module, and a structural component of the electronic device.

When the rotating mechanism is in a folded state, the first synchronization swing arm folds relative to the second synchronization swing arm. To be specific, the first synchronization swing arm and the second synchronization swing arm rotate in a direction close to each other, so that the first synchronization swing arm and the second synchronization swing arm are stacked. When the rotating mechanism is in a flattened state, the first synchronization swing arm and the second synchronization swing arm flatten relative to the fixed base, and an angle between the first synchronization swing arm and the second synchronization swing arm is approximately 180 degrees.

In this embodiment, the first gear, the intermediate gear, and the second gear are all disposed as helical gears, so that contact ratios between the intermediate gear and the first gear and the second gear are increased, thereby improving transmission stability of the synchronization gear, and improving rotation stability of the rotating mechanism. In addition, the first gear, the intermediate gear, and the second gear are disposed as helical gears, so that a tooth root can be further prevented from being broken, thereby improving an impact resistance capability and a bearing capability of the rotating mechanism, and improving durability of the rotating mechanism. In addition, after the contact ratios of the synchronization gear are increased, when a continuous transmission condition is met, based on an actual application scenario, a gear module may be appropriately increased and a tooth quantity of the gear may be appropriately reduced, so that a diameter of the gear can be reduced, and a thickness of the rotating mechanism in the folded state can be reduced, thereby implementing lightness and thinness of the foldable electronic device. In addition, the first gear, the intermediate gear, and the second gear are disposed side by side and in parallel, so that a thickness of the rotating mechanism can be reduced, thereby further implementing lightness and thinness of the foldable electronic device.

In a possible implementation, the rotating mechanism includes the folded state and the flattened state, when the rotating mechanism is in the flattened state, the first synchronization swing arm unfolds relative to the second synchronization swing arm, and when rotating in a direction close to the fixed base, the first synchronization swing arm drives the first gear to rotate, to drive the second gear to rotate, to drive the second synchronization swing arm to rotate in a direction close to the first synchronization swing arm, so that the first synchronization swing arm folds relative to the second synchronization swing arm, and the rotating mechanism is in the folded state.

In this embodiment, the first synchronization swing arm and the second synchronization swing arm implement synchronous rotation through the synchronization gear, to implement synchronous rotation of the rotating mechanism, thereby improving rotation convenience and reliability of the rotating mechanism, and improving use experience of a user.

In a possible implementation, a contact ratio between the intermediate gear and the first gear is greater than 1.2, and a contact ratio between the intermediate gear and the second gear is greater than 1.2.

It should be noted that the contact ratio is equal to a sum of a transverse contact ratio and a longitudinal contact ratio. In this embodiment, the contact ratio between the intermediate gear and the first gear is set to be greater than 1.2, and the contact ratio between the intermediate gear and the second gear is set to be greater than 1.2, so that transmission stability of the synchronization gear can be improved, and rotation stability of the rotating mechanism can be improved.

In a possible implementation, the intermediate gear includes a third gear and a fourth gear, both the third gear and the fourth gear are helical gears, both the third gear and the fourth gear are disposed between the first gear and the second gear, the third gear engages with the first gear, and the fourth gear engages with the second gear and the third gear.

In this embodiment, the third gear and the fourth gear are disposed between the first gear and the second gear, and when rotating, the first gear drives the third gear to rotate, to drive the fourth gear to rotate, to drive the second gear to rotate, to implement synchronous rotation of the first gear and the second gear, thereby improving transmission stability of the synchronization gear, and improving rotation stability of the rotating mechanism.

In a possible implementation, a contact ratio between the third gear and the fourth gear is greater than 1.2. In this embodiment, the contact ratio between the third gear and the fourth gear is set to be greater than 1.2, so that transmission stability of the synchronization gear can be further improved, and rotation stability of the rotating mechanism can be further improved.

In a possible implementation, the first gear includes first teeth, the second gear includes second teeth, the third gear includes third teeth, and the fourth gear includes fourth teeth. The first tooth, the second tooth, the third tooth, and the fourth tooth are all helical, a helical direction of the first tooth is opposite to a helical direction of the second tooth, and a helical direction of the third gear is opposite to a helical direction of the fourth gear.

In this embodiment, the first tooth, the second tooth, the third tooth, and the fourth tooth are disposed to be helical, so that contact ratios between the intermediate gear and the first gear and the second gear can be increased, thereby improving transmission stability of the synchronization gear, and improving rotation stability of the rotating mechanism; and a tooth root can be prevented from being broken, thereby improving an impact resistance capability and a bearing capability of the rotating mechanism, and improving durability of the rotating mechanism.

In a possible implementation, helix angles of the first tooth, the second tooth, the third tooth, and the fourth tooth are all 15° to 45°.

In this embodiment, the helix angles of the first tooth, the second tooth, the third tooth, and the fourth tooth are all set to 15° to 45°, so that a contact ratio between two adjacent gears can be increased, thereby improving transmission stability of the synchronization gear, and improving rotation stability of the rotating mechanism.

In a possible implementation, the first gear includes first teeth, the second gear includes second teeth, the third gear includes third teeth, and the fourth gear includes fourth teeth. The first tooth, the second tooth, the third tooth, and the fourth tooth are all "V"-shaped.

In this embodiment, the first tooth, the second tooth, the third tooth, and the fourth tooth are all disposed to be "V"-shaped, so that an axial force of the synchronization gear during rotation can be reduced, thereby further improving rotation stability of the synchronization gear, and improving rotation stability of the rotating mechanism.

In a possible implementation, the first tooth includes a first sub-tooth and a second sub-tooth, both the first sub-tooth and the second sub-tooth are helical teeth, and the first sub-tooth is fastened to the second sub-tooth in an axial direction of the first gear. The second tooth includes a third sub-tooth and a fourth sub-tooth, both the third sub-tooth and the fourth sub-tooth are helical teeth, and the third sub-tooth is fastened to the fourth sub-tooth in an axial direction of the second gear. The third tooth includes a fifth sub-tooth and a sixth sub-tooth, both the fifth sub-tooth and the sixth sub-tooth are helical teeth, and the fifth sub-tooth is fastened to the sixth sub-tooth in an axial direction of the third gear. The fourth tooth includes a seventh sub-tooth and an eighth sub-tooth, both the seventh sub-tooth and the eighth sub-tooth are helical teeth, and the seventh sub-tooth is fastened to the eighth sub-tooth in an axial direction of the fourth gear.

The first sub-tooth engages with the fifth sub-tooth, the fifth sub-tooth engages with the seventh sub-tooth, and the seventh sub-tooth engages with the third sub-tooth. The second sub-tooth engages with the seventh sub-tooth, the sixth sub-tooth engages with the eighth sub-tooth, and the eighth sub-tooth engages with the fourth sub-tooth.

In this embodiment, a tooth of each gear is disposed as two sub-teeth, and two adjacent gears separately engage with each other through two sub-teeth, so that axial component forces of a force received by two sub-teeth of a same gear are in opposite directions and therefore can cancel each other out, to reduce an axial force of each gear, thereby further improving rotation stability of the synchronization gear, and improving rotation stability of the rotating mechanism.

In a possible implementation, a helical direction of the first sub-tooth is opposite to a helical direction of the fifth sub-tooth, the helical direction of the fifth sub-tooth is opposite to a helical direction of the seventh sub-tooth, the helical direction of the seventh sub-tooth is opposite to a helical direction of the third sub-tooth, and helix angles of the first sub-tooth, the fifth sub-tooth, the seventh sub-tooth, and the third sub-tooth are all 15° to 45°.

In this embodiment, the first sub-tooth, the fifth sub-tooth, the seventh sub-tooth, and the third sub-tooth are disposed to be helical, and the helix angles are all 15° to 45°, so that a contact ratio between the first gear and the third gear, a contact ratio between the third gear and the fourth gear, and a contact ratio between the fourth gear and the second gear can be increased, thereby improving transmission stability of the synchronization gear, and improving rotation stability of the rotating mechanism.

In a possible implementation, a contact ratio between the first gear and the third gear is greater than 1.2, the contact ratio between the third gear and the fourth gear is greater than 1.2, and a contact ratio between the fourth gear and the second gear is greater than 1.2.

In this embodiment, the contact ratio between the first gear and the third gear is set to be greater than 1.2, the contact ratio between the third gear and the fourth gear is set to be greater than 1.2, and the contact ratio between the fourth gear and the second gear is set to be greater than 1.2, so that transmission stability of the synchronization gear can be further improved, and rotation stability of the rotating mechanism can be further improved.

In a possible implementation, the rotating mechanism further includes a damping member, the damping member includes a damping spring, a first hinge seat, and a second hinge seat, the damping member is mounted in the fixed base, and both the first hinge seat and the second hinge seat are fastened to the damping spring. The first synchronization swing arm includes a first hinge body, the first hinge body is hinged to the first hinge seat, the second synchronization swing arm includes a second hinge body, and the second hinge body is hinged to the second hinge seat.

When the first synchronization swing arm rotates relative to the fixed base, the first hinge body abuts against the first hinge seat, when the second synchronization swing arm rotates relative to the fixed base, the second hinge body abuts against the second hinge seat, and the first hinge seat and the second hinge seat jointly compress the damping spring and enable the damping spring to generate an elastic force.

In this embodiment, the damping member is disposed; and the first hinge body is disposed in the first synchronization swing arm, and the second hinge body is disposed in the second synchronization swing arm, so that when rotating, the first synchronization swing arm and the second synchronization swing arm repeatedly squeeze the damping spring to generate an elastic force. An elastic restoring force generated by the elastic force is applied to the first synchronization swing arm and the second synchronization swing arm in turn, to provide a damping force for rotation of the first synchronization swing arm and the second synchronization swing arm, thereby improving a damping feel of a user during use, and improving use experience of the user.

In a possible implementation, the rotating mechanism includes a first fastening plate and a second fastening plate, the first fastening plate and the second fastening plate are respectively located on the two opposite sides of the fixed base in the width direction, the first synchronization swing arm is slidably connected to the first fastening plate, and the second fastening plate is slidably connected to the second synchronization swing arm.

The first housing is fastened to the first fastening plate, and the second housing is fastened to the second fastening plate. In this embodiment, the first fastening plate and the second fastening plate are disposed, so that when the first housing and the second housing rotate relative to each other, the first synchronization swing arm is driven, through the first fastening plate, to rotate, and the second synchronization swing arm is driven, through the second fastening plate, to rotate, so that rotation stability of the first synchronization swing arm and the second synchronization swing arm can be improved, thereby improving rotation stability of the rotating mechanism and the foldable electronic device.

In a possible implementation, a first rotation groove and a second rotation groove are disposed in the fixed base, and the first rotation groove is disposed opposite to the second rotation groove. The rotating mechanism includes a first main swing arm and a second main swing arm, the first main swing arm is mounted in the first rotation groove and is slidable and rotatable along the first rotation groove, and the first main swing arm is rotatably connected to the first fastening plate. The second main swing arm is mounted in the second rotation groove and is slidable and rotatable along the second rotation groove, and the second main swing arm is rotatably connected to the second fastening plate.

In this embodiment, the first main swing arm and the second main swing arm are disposed, when the first fastening plate rotates relative to the fixed base, the first main swing arm rotates and slides in the first rotation groove, and when the second fastening plate rotates relative to the fixed base, the second main swing arm rotates and slides in the second rotation groove, so that the first fastening plate and the second fastening plate can rotate relative to the fixed base.

In a possible implementation, the first main swing arm includes a first rotation body and a first swing body, the first rotation body is fastened to the first swing body, the first rotation body includes a first slide part and two second slide parts, and the two second slide parts are connected to two opposite sides of the first slide part. The first rotation groove includes a first slide rail and two second slide rails, and the two second slide rails are respectively located on two opposite sides of the first slide rail and are disposed side by side with the first slide rail in a length direction of the fixed base. The first rotation body is mounted in the first rotation groove, the first slide part is mounted in the first slide rail, and one second slide part is mounted in one second slide rail.

In this embodiment, the first slide rail and the two second slide rails are disposed in the first rotation groove, and a slide track of the first main swing arm is limited by the first slide rail and the two second slide rails, so that a precision requirement for the first rotation groove can be reduced, and processing costs can be reduced. In addition, rotation stability of the first main swing arm can be further improved. In addition, the first slide rail and the two second slide rails are arranged in a distributed manner, so that processing difficulty of the fixed base is reduced.

In a possible implementation, one second slide rail includes a slide rail bottom wall and a bump, the bump is connected to a side wall of the first rotation groove and is disposed opposite to and apart from the slide rail bottom wall, a first hollow part is further disposed on a bottom wall of the first rotation groove, and the first hollow part penetrates the bottom wall of the first rotation groove and is disposed opposite to the bump. The second slide part is located between the slide rail bottom wall and the bump.

In this embodiment, the first hollow part is disposed, so that the fixed base can be prepared in a molding manner, thereby simplifying a processing process of the fixed base, and avoiding a backlash problem. In addition, in this embodiment, the bump is disposed on the side wall of the first rotation groove, so that the first main swing arm can be limited, to prevent the first main swing arm from being separated from the first rotation groove in a rotation process, thereby improving rotation stability of the first main swing arm.

In a possible implementation, a first rotation shaft and a second rotation shaft are further mounted in the fixed base, the first rotation shaft and the second rotation shaft are disposed opposite to and parallel to each other and are rotatably connected to the fixed base, and both extension directions of the first rotation shaft and the second rotation shaft are parallel to the length direction of the fixed base. The rotating mechanism includes a first auxiliary swing arm and a second auxiliary swing arm, and the first auxiliary swing arm is fastened to the first rotation shaft and is slidably connected to the first fastening plate. The second auxiliary swing arm is fastened to the second rotation shaft and is slidably connected to the second fastening plate.

In this embodiment, the first auxiliary swing arm is disposed, so that when rotating relative to the fixed base, the first fastening plate drives the first auxiliary swing arm to rotate together with the first main swing arm, to implement rotation of the first fastening plate relative to the fixed base, thereby improving rotation stability of the first fastening plate. The second auxiliary swing arm is disposed, so that when rotating relative to the fixed base, the second fastening plate drives the second auxiliary swing arm to rotate together with the second main swing arm, to implement rotation of the second fastening plate relative to the fixed base, thereby improving rotation stability of the second fastening plate.

In a possible implementation, the rotating mechanism further includes a floating plate, and the floating plate is mounted in the fixed base and is rotatably connected to the first rotation shaft and the second rotation shaft. When rotating relative to the fixed base, the first auxiliary swing arm drives the first rotation shaft to rotate, when rotating relative to the fixed base, the second auxiliary swing arm drives the second rotation shaft to rotate, and the first rotation shaft and the second rotation shaft rotate, to drive the floating plate to move in a thickness direction of the fixed base.

The floating plate is disposed at an FPC cable position of the rotating mechanism. In this embodiment, the floating plate is disposed, so that an FPC cable can be protected, to prevent the display screen from squeezing the FPC cable when the rotating mechanism is in the folded state, causing damage to the FPC cable. In addition, when the rotating mechanism is in the flattened state, the floating plate supports the display screen, and when the rotating mechanism is in the folded state, the floating plate sinks to avoid the display screen, to prevent the display screen from being squeezed.

In a possible implementation, the first rotation shaft includes a first fastening part and a first extension part, and an axis of the first fastening part is disposed parallel to and apart from an axis of the first extension part. The second rotation shaft includes a second fastening part and a second extension part, and an axis of the second fastening part is disposed parallel to and apart from an axis of the second extension part. A first mounting groove and a second mounting groove are disposed in the floating plate, and the first mounting groove is disposed apart from the second mounting groove. The first extension part is located in the first mounting groove, and the second extension part is located in the second mounting groove.

When the first auxiliary swing arm and the second auxiliary swing arm rotate in a direction close to each other, the first extension part and the second extension part drive the floating plate to move toward the inside of the fixed base. When the first auxiliary swing arm and the second auxiliary swing arm rotate in a direction away from each other, the first extension part and the second extension part drive the floating plate to move in a direction away from the fixed base.

In this embodiment, the first auxiliary swing arm and the second auxiliary swing arm rotate, to drive the first rotation shaft and the second rotation shaft to rotate, to drive the floating plate to move, so that when the rotating mechanism is in the flattened state, the floating plate moves toward the display screen, to support the display screen, and when the rotating mechanism is in the folded state, the floating plate sinks to avoid the display screen, to prevent the display screen from being squeezed.

In a possible implementation, the rotating mechanism further includes a first pressing plate and a second pressing plate, the first pressing plate is slidably connected to the first fastening plate, and when rotating relative to the fixed base, the first fastening plate can drive the first pressing plate to rotate relative to the fixed base. The second pressing plate is slidably connected to the second fastening plate, and when rotating relative to the fixed base, the second pressing plate can drive the second pressing plate to rotate relative to the fixed base.

In this embodiment, the first pressing plate and the second pressing plate are disposed, and when the rotating mechanism is in the flattened state, the first pressing plate and the second pressing plate jointly support the display screen, so that connection stability of the display screen can be improved, to ensure good display of the display screen.

In a possible implementation, a third rotation groove and a fourth rotation groove are further disposed in the fixed base, and the third rotation groove is disposed opposite to the fourth rotation groove. The rotating mechanism further includes a first pressing plate swing arm and a second pressing plate swing arm, the first pressing plate swing arm is mounted in the third rotation groove and is slidable and rotatable along the third rotation groove, and the first pressing plate swing arm is slidably connected to the first pressing plate. The second pressing plate swing arm is mounted in the fourth rotation groove and is slidable and rotatable along the fourth rotation groove, and the second pressing plate swing arm is slidably connected to the second pressing plate.

In this embodiment, the first pressing plate swing arm is disposed, and the first pressing plate drives the first pressing plate swing arm to rotate, to implement rotation of the first pressing plate relative to the fixed base, thereby improving rotation stability of the first pressing plate. The second pressing plate swing arm is disposed, and the second pressing plate drives the second pressing plate swing arm to rotate, to implement rotation of the second pressing plate relative to the fixed base, thereby improving rotation stability of the second pressing plate.

In a possible implementation, the fixed base further includes a flexible support member, the flexible support member is mounted in the fixed base, and when the rotating mechanism is in the folded state, the flexible support member bends and forms an avoidance space. When the rotating mechanism is in the flattened state, the flexible support member unfolds.

In this embodiment, the flexible support member is disposed, and when the rotating mechanism is in the flattened state, the flexible support member, the first pressing plate, and the second pressing plate jointly support the display screen, to ensure good display of the display screen. When the rotating mechanism is in the folded state, a foldable part of the display screen bends and protrudes toward the flexible support member, the flexible support member bends and forms a water-drop-shaped structure, and a middle part of the flexible support member sinks toward the inside of the fixed base and forms an avoidance space, to avoid the display screen, to prevent the flexible support member 70 from squeezing the display screen, causing damage to the display screen.

This application further provides a foldable electronic device, including a first housing, a second housing, a display screen, and the foregoing rotating mechanism. The rotating mechanism is connected between the first housing and the second housing, the display screen is mounted on the first housing, the second housing, and the rotating mechanism, and when the rotating mechanism rotates, the first housing and the second housing rotate relative to each other, to drive the display screen to bend or unfold.

In this embodiment, the rotating mechanism in which the synchronization gear is a helical gear is disposed in the foldable electronic device, so that rotation stability of the foldable electronic device can be improved, and use experience of a user can be improved.

In conclusion, in this application, the first gear, the intermediate gear, and the second gear are all disposed as helical gears, so that contact ratios between the intermediate gear and the first gear and the second gear are increased, thereby improving transmission stability of the synchronization gear, and improving rotation stability of the rotating mechanism. In addition, the first gear, the intermediate gear, and the second gear are disposed as helical gears, so that a tooth root can be further prevented from being broken, thereby improving an impact resistance capability and a bearing capability of the rotating mechanism, and improving durability of the rotating mechanism. In addition, after the contact ratios of the synchronization gear are increased, when a continuous transmission condition is met, based on an actual application scenario, a gear module may be appropriately increased and a tooth quantity of the gear may be appropriately reduced, so that a diameter of the gear can be reduced, and a thickness of the rotating mechanism in the folded state can be reduced, thereby implementing lightness and thinness of the foldable electronic device.

### BRIEF DESCRIPTION OF THE DRAWINGS

To describe the technical solutions in embodiments of this application or in the background more clearly, the following describes the accompanying drawings for describing embodiments of this application or the background.
FIG. 1 is a schematic diagram of a structure of a foldable electronic device in a first state according to an embodiment of this application;
FIG. 2 is a schematic diagram of a structure of a foldable electronic device in a second state according to an embodiment of this application;
FIG. 3 is a schematic diagram of a structure of a foldable electronic device in a third state according to an embodiment of this application;
FIG. 4 is a schematic diagram of an exploded structure of the foldable electronic device shown in FIG. 3;
FIG. 5 is a schematic diagram of a structure of a rotating mechanism in the foldable electronic device shown in FIG. 4;
FIG. 6 is a schematic diagram of an exploded structure of the rotating mechanism shown in FIG. 5;
FIG. 7 is a schematic diagram of an exploded structure of a fixed base in the rotating mechanism shown in FIG. 6;
FIG. 8 is a schematic diagram of a partially enlarged structure of the fixed base shown in FIG. 7;
FIG. 9 is a schematic diagram of an enlarged structure of a fastening plate in a first rotation assembly in the rotating mechanism shown in FIG. 6;
FIG. 10 is a schematic diagram of a structure of a main swing arm of a first rotation assembly in the rotating mechanism shown in FIG. 6;
FIG. 11 is a schematic diagram of an enlarged structure of an auxiliary swing arm of a first rotation assembly 1 in the rotating mechanism shown in FIG. 6;
FIG. 12 is a schematic diagram of a partial structure of the rotating mechanism shown in FIG. 5 in a flattened state;
FIG. 13 is a schematic diagram of a partial structure of the rotating mechanism shown in FIG. 12 in a folded state;
FIG. 14 is a schematic diagram of a structure of a first synchronization assembly in the rotating mechanism shown in FIG. 6;
FIG. 15 is a schematic diagram of a partially enlarged structure of the first synchronization assembly shown in FIG. 14;
FIG. 16 is a schematic diagram of a partial structure of the first synchronization assembly shown in FIG. 14 in another implementation;
FIG. 17 is a schematic diagram of a partial structure of the first synchronization assembly shown in FIG. 14;
FIG. 18 is a schematic diagram of a partial structure of the rotating mechanism shown in FIG. 5 in a flattened state;
FIG. 19 is a schematic diagram of a partial structure of the rotating mechanism shown in FIG. 5 in a folded state;
FIG. 20 is a schematic diagram of a partial exploded structure of a pressing plate assembly in the rotating mechanism shown in FIG. 6;
FIG. 21 is a schematic diagram of an exploded structure of the pressing plate assembly shown in FIG. 20 at another angle;
FIG. 22 is a cross-section view of the rotating mechanism shown in FIG. 5 in a folded state;
FIG. 23 is a schematic diagram of an enlarged structure of a floating plate in the rotating mechanism shown in FIG. 6;
FIG. 24 is a schematic diagram of a partial structure of the rotating mechanism shown in FIG. 5;
FIG. 25 is a schematic diagram of a cross-section structure of the rotating mechanism shown in FIG. 5 in a flattened state; and
FIG. 26 is a schematic diagram of a structure of the rotating mechanism shown in FIG. 5 in a folded state.

### DESCRIPTION OF EMBODIMENTS

The following describes embodiments of this application with reference to accompanying drawings in embodiments of this application.

With the development of science and technologies, an appearance (ID) form of an electronic device (such as a cellphone or a tablet computer) tends to develop from a bar-type machine to a foldable machine. The foldable machine has a large-area screen in an open state and therefore fully meets visual experience of a consumer; and has a small volume in a closed state and therefore is easy to carry. Most foldable machines in the conventional technology implement synchronous movement through synchronization gears 513 in synchronization mechanisms. However, most existing synchronization gears 513 are in spur tooth structures and therefore have poor transmission stability. A rotating mechanism 100 provided in this application uses a helical gear instead of a spur gear, so that rotation stability of the rotating mechanism 100 can be improved, thereby improving use experience of a user.

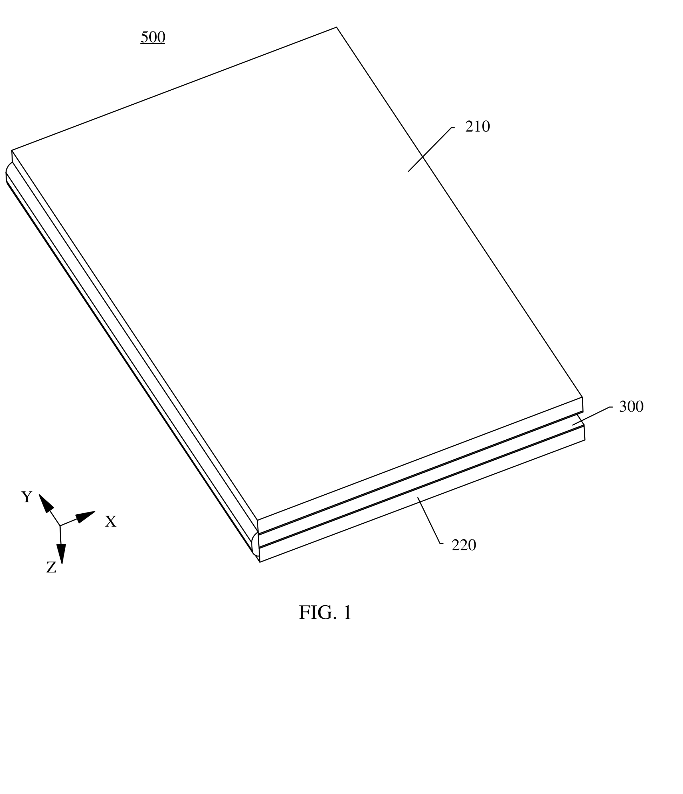

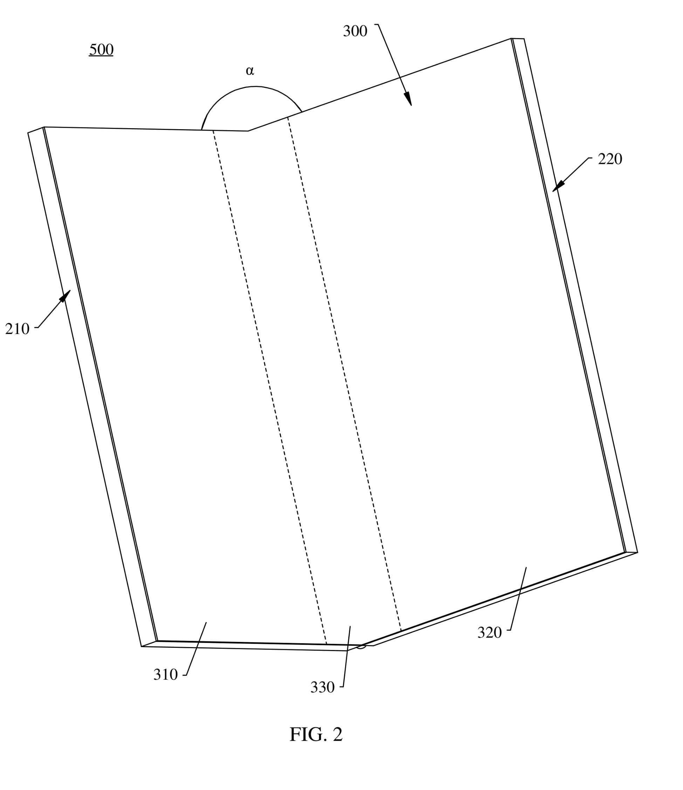

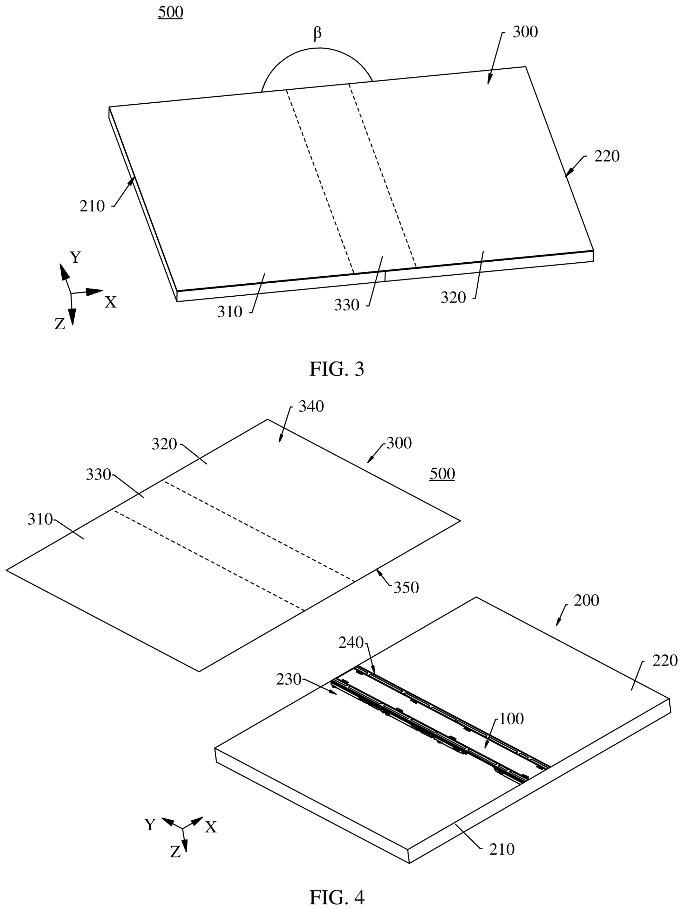

Referring to FIG. 1 to FIG. 3, FIG. 1 is a schematic diagram of a structure of a foldable electronic device 500 in a first state according to an embodiment of this application, FIG. 2 is a schematic diagram of a structure of the foldable electronic device 500 in a second state according to an embodiment of this application, and FIG. 3 is a schematic diagram of a structure of the foldable electronic device 500 in a third state according to an embodiment of this application.

For ease of description, a width direction of the foldable electronic device 500 is defined as an X direction, a length direction of the foldable electronic device 500 is defined as a Y direction, and a thickness direction of the foldable electronic device 500 is defined as a Z direction. The X direction, the Y direction, and the Z direction are perpendicular to each other.

The foldable electronic device 500 includes but is not limited to a cellphone (cellphone), a notebook computer (notebook computer), a tablet personal computer (tablet personal computer), a laptop computer (laptop computer), a personal digital assistant (personal digital assistant), a wearable device (wearable device), an in-vehicle device (mobile device), and the like. In this embodiment of this application, an example in which the foldable electronic device 500 is a cellphone is used for description.

The foldable electronic device 500 shown in FIG. 1 is in a folded state, the foldable electronic device 500 shown in FIG. 2 is in a half-unfolded state, and the foldable electronic device 500 shown in FIG. 3 is in a flattened state. An unfolding angle α of the foldable electronic device 500 shown in FIG. 2 is 90 degrees, and an unfolding angle β of the foldable electronic device 500 shown in FIG. 3 is 180 degrees.

It should be noted that a slight deviation is allowed in any angle described by using an example in embodiments of this application. For example, that an unfolding angle α of the foldable electronic device 500 shown in FIG. 2 is 90 degrees means that α may be 90 degrees, or may be approximately 90 degrees, for example, 80 degrees, 85 degrees, 95 degrees, or 100 degrees. That an unfolding angle β of the foldable electronic device 500 shown in FIG. 3 is 180 degrees means that β may be 180 degrees, or may be approximately 180 degrees, for example, 170 degrees, 175 degrees, 185 degrees, or 190 degrees. Angles described by using examples below can be understood in the same manner.

The foldable electronic device 500 shown in embodiments of this application is an electronic device that can fold once. In some other embodiments, the foldable electronic device 500 may alternatively be an electronic device that can fold a plurality of times (at least two times). In this case, the foldable electronic device 500 may include a plurality of parts, two adjacent parts can fold in a direction relatively close to each other until the foldable electronic device 500 is in a folded state, and two adjacent parts can unfold in a direction relatively away from each other until the foldable electronic device 500 is in a flattened state.

Referring to FIG. 4, FIG. 4 is a schematic diagram of an exploded structure of the foldable electronic device 500 shown in FIG. 3.

The foldable electronic device 500 includes a foldable apparatus 200 and a display screen 300, and the display screen 300 is mounted on the foldable apparatus 200. The display screen 300 includes a display surface 340 and a mounting surface 350, and the display surface 340 is disposed opposite to the mounting surface 350. The display surface 340 is configured to display text, an image, a video, and the like. The display screen 300 includes a first part 310, a second part 320, and a foldable part 330. The foldable part 330 is located between the first part 310 and the second part 320, and the foldable part 330 can bend in the Y direction. The first part 310, the second part 320, and the foldable part 330 jointly constitute the display screen 300. In this embodiment, the display screen 300 uses a flexible display screen, for example, an organic light-emitting diode (organic light-emitting diode, OLED) display screen, an active-matrix organic light-emitting diode (active-matrix organic light-emitting diode, AMOLED) display screen, a mini organic light-emitting diode (mini organic light emitting diode) display screen, a micro light-emitting diode (micro organic light-emitting diode) display screen, a micro organic light-emitting diode (micro organic light-emitting diode) display screen, or a quantum dot light-emitting diode (quantum dot light emitting diodes, QLED) display screen.

The foldable apparatus 200 includes a first housing 210, a second housing 220, and a rotating mechanism 100. A first accommodation groove 230 is disposed in the first housing 210, a second accommodation groove 240 is disposed in the second housing 220, and the first accommodation groove 230 communicates with the second accommodation groove 240 to form an accommodation groove of the rotating mechanism 100. The rotating mechanism 100 is mounted in the accommodation groove and is fastened to the first housing 210 and the second housing 220, to implement rotatable connection between the first housing 210 and the second housing 220. The display screen 300 is mounted on the foldable apparatus 200, and the mounting surface 350 is fastened to the foldable apparatus 200. Specifically, the first housing 210 bears the first part 310 of the display screen 300, and the second housing 220 bears the second part 320. In other words, the first part 310 is mounted on the first housing 210, and the second part 320 is mounted on the second housing 220. The rotating mechanism 100 is disposed opposite to the foldable part 330. The first housing 210 and the second housing 220 can rotate relative to each other through the rotating mechanism 100, so that the foldable apparatus 200 switches between a folded state and a flattened state.

With reference to FIG. 1, the first housing 210 and the second housing 220 rotate relative to each other through the rotating mechanism 100, and the first housing 210 and the second housing 220 are relatively close to each other to drive the display screen 300 to fold, so that the foldable electronic device 500 folds. When the foldable electronic device 500 is in the folded state, the foldable part 330 of the display screen 300 bends, and the first part 310 is disposed opposite to the second part 320. In this case, the display screen 300 is located between the first housing 210 and the second housing 220, so that a probability that the display screen 300 is damaged can be greatly reduced, thereby effectively protecting the display screen 300.

Referring to FIG. 2 and FIG. 4 together, the first housing 210 and the second housing 220 rotate relative to each other through the rotating mechanism 100, and the first housing 210 and the second housing 220 are relatively away from each other to drive the display screen 300 to unfold, so that the foldable electronic device 500 unfolds to a half-unfolded state. When the foldable electronic device 500 is in the half-unfolded state, the first housing 210 and the second housing 220 unfold to an angle α, and the first part 310 and the second part 320 unfold relative to each other and drive the foldable part 330 to unfold. In this case, an angle between the first part 310 and the second part 320 is α. In this embodiment, α is 90 degrees. In another embodiment, α may alternatively be approximately 90 degrees, and may be 80 degrees, 85 degrees, 95 degrees, 100 degrees, or the like.

Referring to FIG. 3 and FIG. 4 together, the first housing 210 and the second housing 220 rotate relative to each other through the rotating mechanism 100, and the first housing 210 and the second housing 220 are relatively away from each other to drive the display screen 300 to further unfold until the foldable electronic device 500 flattens. When the foldable apparatus 200 is in the flattened state, an angle between the first housing 210 and the second housing 220 is β. The foldable part 330 unfolds, and the first part 310 and the second part 320 unfold relative to each other. In this case, both angles between the first part 310 and the second part 320 and the foldable part 330 are β, and the display screen 300 has a large-area display region, to implement large-screen display of the foldable electronic device 500, thereby improving use experience of a user. In this embodiment, β is 180 degrees. In another embodiment, β may alternatively be approximately 180 degrees, and may be 170 degrees, 175 degrees, 185 degrees, 190 degrees, or the like.

It should be noted that both the angle α and the angle β are angles between the first housing 210 and the second housing 220, and are merely used herein to distinguish between different angles between the first housing 210 and the second housing 220 in different states of the foldable electronic device 500. The angle α is an angle between the first housing 210 and the second housing 220 in the half-unfolded state of the foldable electronic device 500. The angle β is an angle between the first housing 210 and the second housing 220 in the flattened state of the foldable electronic device 500.

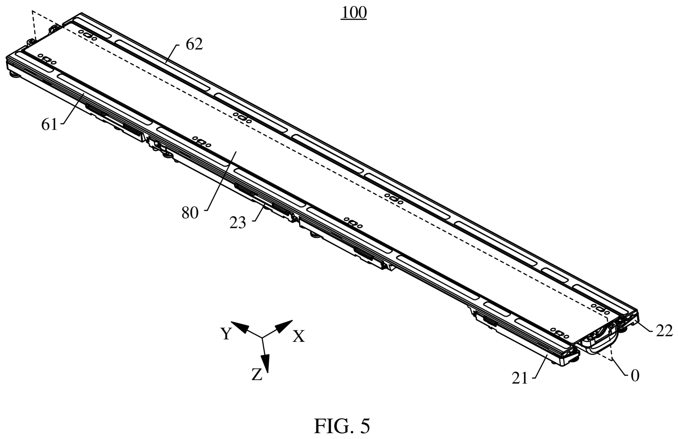

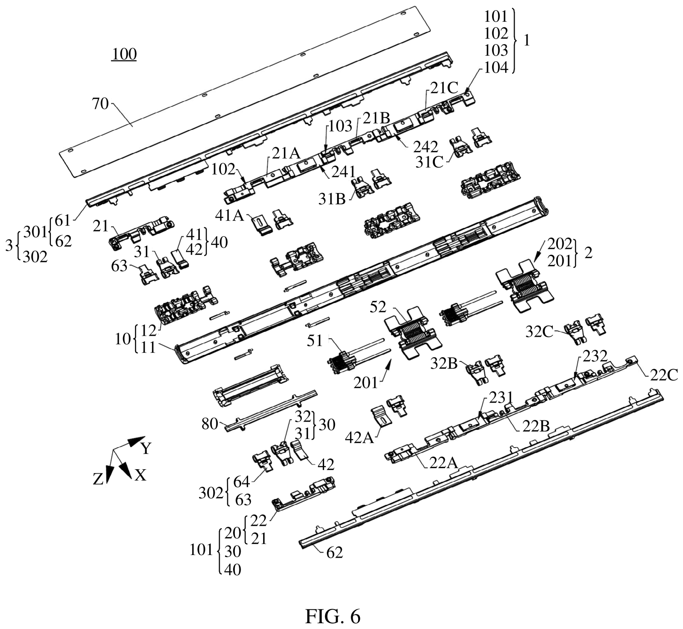

Referring to FIG. 5 and FIG. 6, FIG. 5 is a schematic diagram of a structure of the rotating mechanism 100 in the foldable electronic device 500 shown in FIG. 4, and FIG. 6 is a schematic diagram of an exploded structure of the rotating mechanism 100 shown in FIG. 5.

The rotating mechanism 100 includes a fixed base 10, a rotation assembly 1, a synchronization assembly 2, a pressing plate assembly 3, a floating plate 80, and a flexible support member 70. The floating plate 80 is mounted in the fixed base 10, and the floating plate 80 can move in the Z direction relative to the fixed base 10. The flexible support member 70 is mounted on the pressing plate assembly 3, and when the rotating mechanism 100 rotates from the flattened state to the folded state, the flexible support member 70 can bend, to avoid the display screen 300. The pressing plate assembly 3 is slidably and rotatably connected to the rotation assembly 1. The rotation assembly 1 is mounted in the fixed base 10 and can rotate relative to the fixed base 10, so that the fixed base 10 is rotatably connected to the rotation assembly 1. The synchronization assembly 2 is mounted in the fixed base 10 and is slidably connected to the rotation assembly 1. When rotating relative to the fixed base 10, the rotation assembly 1 drives the pressing plate assembly 3 and the synchronization assembly 2 to rotate relative to the fixed base 10, so that the rotating mechanism 100 rotates, and the rotating mechanism 100 switches between the folded state and the flattened state.

For ease of description, a symmetry axis O is set in this application (as shown in FIG. 5). The symmetry axis O is perpendicular to the X direction, the symmetry axis O passes through a center of the rotating mechanism 100, and the rotating mechanism 100 is axially symmetrical about the symmetry axis O.

In this embodiment, there are four rotation assemblies 1, and the four rotation assemblies 1 are respectively a first rotation assembly 101, a second rotation assembly 102, a third rotation assembly 103, and a fourth rotation assembly 104. The first rotation assembly 101, the second rotation assembly 102, the third rotation assembly 103, and the fourth rotation assembly 104 are sequentially arranged apart in the Y direction. The first rotation assembly 101 is located on a Y-axis negative direction side of the fixed base 10, and the fourth rotation assembly 104 is located on a Y-axis positive direction side of the fixed base 10. In another embodiment, there may alternatively be one rotation assembly 1, two rotation assemblies 1, three rotation assemblies 1, or more than four rotation assemblies 1. A quantity of rotation assemblies 1 is not specifically limited in this application.

The first rotation assembly 101 includes a fastening plate 20, a main swing arm 30, and an auxiliary swing arm 40. The fastening plate 20 includes a first fastening plate 21 and a second fastening plate 22, the main swing arm 30 includes a first main swing arm 31 and a second main swing arm 32, and the auxiliary swing arm 40 includes a first auxiliary swing arm 41 and a second auxiliary swing arm 42. Both the main swing arm 30 and the auxiliary swing arm 40 are mounted in the fixed base 10 and can rotate relative to the fixed base 10. The first fastening plate 21, the first main swing arm 31, and the first auxiliary swing arm 41 are located on one side of the fixed base 10 in the X direction, and the second fastening plate 22, the second main swing arm 32, and the second auxiliary swing arm 42 are located on the other side of the fixed base 10 in the X direction. The first main swing arm 31 is rotatably connected to the first fastening plate 21, and the first auxiliary swing arm 41 is slidably connected to the first fastening plate 21. When rotating relative to the fixed base 10, the first fastening plate 21 drives the first main swing arm 31 and the first auxiliary swing arm 41 to rotate relative to the fixed base 10. The second main swing arm 32 is rotatably connected to the second fastening plate 22, and the second auxiliary swing arm 42 is slidably connected to the second fastening plate 22. When rotating relative to the fixed base 10, the second fastening plate 22 drives the second main swing arm 32 and the second auxiliary swing arm 42 to rotate relative to the fixed base 10.

The second rotation assembly 102 and the first rotation assembly 101 may be same or similar assemblies, symmetrical or partially symmetrical structures, or different structures. In this embodiment, the second rotation assembly 102 includes a first fastening plate 21A, a second fastening plate 22A, a first auxiliary swing arm 41A, and a second auxiliary swing arm 42A. For basic structures of components in the second rotation assembly 102, a connection relationship between the components, and a connection relationship between the component and a component outside the assembly, refer to the related design of the first rotation assembly 101. The second rotation assembly 102 and the first rotation assembly 101 may be the same or different in detail structures or position arrangement of components. In some other embodiments, the second rotation assembly 102 may also include a first main swing arm and a second main swing arm. A structure of the first main swing arm in the second rotation assembly 102 may be the same as or similar to the structure of the first main swing arm 31 in the first rotation assembly 101, and a structure of the second main swing arm in the second rotation assembly 102 may be the same as or similar to the structure of the second main swing arm 32 in the first rotation assembly 101. This is not specifically limited in this application.

The third rotation assembly 103 and the second rotation assembly 102 may be same or similar assemblies, symmetrical or partially symmetrical structures, or different structures. In this embodiment, a structure of the third rotation assembly 103 is the same as the structure of the second rotation assembly 102. The third rotation assembly 103 includes a first fastening plate 21B, a second fastening plate 22B, a first main swing arm 31B, and a second main swing arm 32B. When rotating relative to the fixed base 10, the first fastening plate 21B drives the first main swing arm 31B to slide and rotate relative to the fixed base 10. When rotating relative to the fixed base 10, the second fastening plate 22B drives the second main swing arm 32B to slide and rotate relative to the fixed base 10. Specifically, for structures of components in the third rotation assembly 103 and connection relationships between the components and the fixed base 10, refer to the related descriptions of the first rotation assembly 101.

The fourth rotation assembly 104 and the third rotation assembly 103 may be same or similar assemblies, symmetrical or partially symmetrical structures, or different structures. In this embodiment, a structure of the fourth rotation assembly 104 is the same as the structure of the second rotation assembly 102. The fourth rotation assembly 104 includes a first fastening plate 21C, a second fastening plate 22C, a first main swing arm 31C, and a second main swing arm 32C. When rotating relative to the fixed base 10, the first fastening plate 21C drives the first main swing arm 31C to slide and rotate relative to the fixed base 10. When rotating relative to the fixed base 10, the second fastening plate 22C drives the second main swing arm 32C to slide and rotate relative to the fixed base 10. Specifically, for structures of components in the fourth rotation assembly 104 and connection relationships between the components and the fixed base 10, refer to the related descriptions of the first rotation assembly 101.

In this embodiment, the first fastening plate 21A in the second rotation assembly 102, the first fastening plate 21B in the third rotation assembly 103, and the first fastening plate 21C in the fourth rotation assembly 104 are in an integrally formed structure and jointly constitute a third fastening plate 23. The second fastening plate 22A in the second rotation assembly 102, the second fastening plate 22B in the third rotation assembly 103, and the second fastening plate 22C in the fourth rotation assembly 104 are in an integrally formed structure and jointly constitute a fourth fastening plate 24. In another embodiment, the first fastening plate 21A in the second rotation assembly 102, the first fastening plate 21B in the third rotation assembly 103, and the first fastening plate 21C in the fourth rotation assembly 104 may alternatively be in a split structure. The second fastening plate 22A in the second rotation assembly 102, the second fastening plate 22B in the third rotation assembly 103, and the second fastening plate 22C in the fourth rotation assembly 104 may alternatively be in a split structure.

The pressing plate assembly 3 includes a pressing plate 301 and a pressing plate swing arm 302. The pressing plate swing arm 302 is slidably connected to the pressing plate 301. The pressing plate 301 is slidably connected to the fastening plate 20 in the first rotation assembly 101, the third fastening plate 23, and the fourth fastening plate 24. The pressing plate swing arm 302 is mounted in the fixed base 10 and is rotatably and slidably connected to the fixed base 10. When the rotation assemblies 1 rotate relative to the fixed base 10, the fastening plate in the first rotation assembly 101, the third fastening plate 23, and the fourth fastening plate 24 all rotate relative to the fixed base 10, to jointly drive the pressing plate 301 to rotate relative to the fixed base 10, and the pressing plate 301 slides relative to the fastening plate 20. In addition, the pressing plate 301 drives the pressing plate swing arm 302 to rotate relative to the fixed base 10.

The synchronization assembly 2 is mounted in the fixed base 10 and is slidably connected to the fastening plate 20. In this embodiment, there are two synchronization assemblies 2. In another embodiment, there may alternatively be one synchronization assembly 2 or at least three synchronization assemblies 2. The two synchronization assemblies 2 in this embodiment are respectively a first synchronization assembly 201 and a second synchronization assembly 202. The first synchronization assembly 201 includes a synchronization member 51, a damping member 52, and a synchronization swing arm. The synchronization member 51 is fastened to the damping member 52 and is mounted in the fixed base 10. The synchronization swing arm is fastened to the damping member 52 and is slidably connected to the rotation assembly 1. When rotating relative to the fixed base 10, the rotation assembly 1 drives the synchronization swing arm to rotate, and generates a force on the damping member 52, so that the damping member 52 generates a damping force. In addition, the synchronization swing arm drives the synchronization member 51 to rotate, to implement synchronous rotation of the rotating mechanism 100. In a rotation process of the foldable electronic device 500, the damping member 52 can provide a damping force, so that a user experiences a relatively good damping feel, thereby improving use experience of the user. When the damping force reaches a specific value, the foldable electronic device 500 further hovers at a preset angle.

The second synchronization assembly 202 and the first synchronization assembly 201 may be same or similar assemblies, symmetrical or partially symmetrical structures, or different structures. In this embodiment, a structure of the second synchronization assembly 202 is the same as the structure of the first synchronization assembly 201. Details are not described herein.

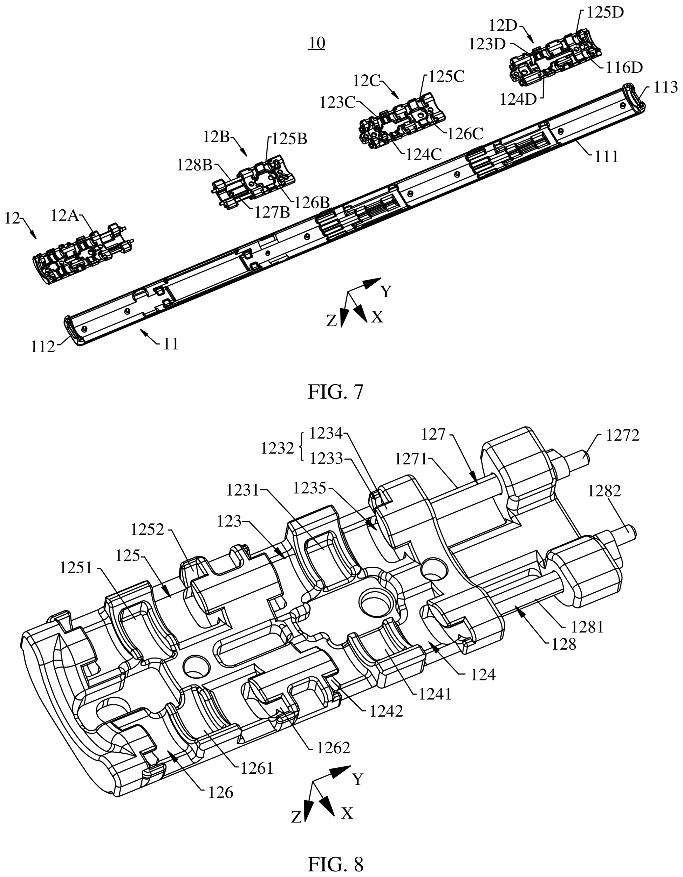

Referring to FIG. 7 and FIG. 8, FIG. 7 is a schematic diagram of an exploded structure of the fixed base 10 in the rotating mechanism 100 shown in FIG. 6, and FIG. 8 is a schematic diagram of a partially enlarged structure of the fixed base 10 shown in FIG. 7.

The fixed base 10 includes a lower housing 11 and an upper housing 12. The lower housing 11 includes a bottom plate 111, a first end plate 112, and a second end plate 113. The first end plate 112 and the second end plate 113 are located on two opposite sides of the bottom plate 111 in the Y direction and are fastened to the bottom plate 111. The upper housing 12 is mounted in the lower housing 11 and is fastened to the lower housing 11, and the upper housing 12 is disposed opposite to the bottom plate 111. In this embodiment, the upper housing 12 is fastened to the lower housing 11 through bolts. In another embodiment, the upper housing may alternatively be fastened to the lower housing through glue, welding, or the like.

In this embodiment, the upper housing 12 includes four sub-housings. The four sub-housings are respectively a first sub-housing 12A, a second sub-housing 12B, a third sub-housing 12C, and a fourth sub-housing 12D. The first sub-housing 12A, the second sub-housing 12B, the third sub-housing 12C, and the fourth sub-housing 12D are sequentially arranged apart in the Y direction. The first sub-housing 12A is located on the Y-axis negative direction side of the fixed base 10, and the fourth sub-housing 12D is located on the Y-axis positive direction side of the fixed base 10. In this embodiment, the four sub-housings are in a split structure. In another embodiment, the four sub-housings may alternatively be in an integrally formed structure.

A first rotation groove 123 and a second rotation groove 124 are disposed in the first sub-housing 12A. In this embodiment, the first rotation groove 123 and the second rotation groove 124 are disposed side by side in the X direction, and the first rotation groove 123 and the second rotation groove 124 are axially symmetrical about the symmetry axis O. A bottom wall of the first rotation groove 123 is arc-shaped, and a first slide rail 1231 is disposed on the bottom wall of the first rotation groove 123. The first slide rail 1231 is arc-shaped, and a bending direction of the first slide rail 1231 is approximately the same as a bending direction of the bottom wall of the first rotation groove 123. A second slide rail 1232 is disposed on a side wall of the first rotation groove 123. In this embodiment, there are two second slide rails 1232, and the two second slide rails 1232 are symmetrically disposed on two opposite side walls of the first rotation groove 123. A bending direction of the second slide rail 1232 is the same as the bending direction of the first slide rail 1231. Each second slide rail 1232 includes a slide rail bottom wall 1233 and a bump 1234. The bump 1234 is connected to a side wall of the first rotation groove 123 and is disposed opposite to and apart from the slide rail bottom wall 1233. In this embodiment, a first hollow part 1235 is further disposed on the bottom wall of the first rotation groove 123, and the first hollow part 1235 penetrates the bottom wall of the first rotation groove 123 and is disposed opposite to the bump 1234. The first rotation groove 123 is used for the first main swing arm 31 in the first rotation assembly 101, and the first main swing arm 31 can rotate and slide along the first rotation groove 123.

In this embodiment, the first slide rail 1231 and the two second slide rails 1232 are disposed in the first rotation groove 123, and a slide track of the first main swing arm 31 is limited by the first slide rail 1231 and the two second slide rails 1232, so that a precision requirement for the first rotation groove 123 can be reduced, and processing costs can be reduced. In addition, the first slide rail 1231 and the two second slide rails 1232 are arranged in a distributed manner, so that processing difficulty of the first sub-housing 12A is reduced. In addition, the first hollow part 1235 is disposed, so that the first sub-housing 12A can be prepared in a molding manner, thereby simplifying a processing technology of the upper housing 12, and avoiding a backlash problem. In addition, in this embodiment, the bump 1234 is disposed on the side wall of the first rotation groove 123, so that the first main swing arm 31 can be limited, to prevent the first main swing arm 31 from being separated from the first rotation groove 123.

In this embodiment, a structure of the second rotation groove 124 is the same as the structure of the first rotation groove 123. The second rotation groove 124 includes a third slide rail 1241 and two fourth slide rails 1242. The third slide rail 1241 is disposed on a bottom wall of the second rotation groove 124, and the two fourth slide rails 1242 are respectively disposed on two opposite side walls of the second rotation groove 124. The second rotation groove 124 is configured to mount the second main swing arm 32, and the second main swing arm 32 can rotate and slide along the second rotation groove 124.

A third rotation groove 125 and a fourth rotation groove 126 are further disposed in the first sub-housing 12A. The third rotation groove 125 and the fourth rotation groove 126 are disposed side by side in the X direction, and the third rotation groove 125 and the fourth rotation groove 126 are axially symmetrical about the symmetry axis O. The third rotation groove 125 and the first rotation groove 123 are disposed side by side in the Y direction, and the third rotation groove 125 is located in a Y-axis negative direction of the first rotation groove 123. The fourth rotation groove 126 and the second rotation groove 124 are disposed side by side in the Y direction, and the fourth rotation groove 126 is located in a Y-axis negative direction of the second rotation groove 124.

A structure of the third rotation groove 125 is approximately the same as the structure of the first rotation groove 123. The third rotation groove 125 includes a fifth slide rail 1251 and two sixth slide rails 1252. The fifth slide rail 1251 is disposed on a bottom wall of the third rotation groove 125, and the two sixth slide rails 1252 are respectively disposed on two opposite side walls of the third rotation groove 125. The third rotation groove 125 is configured to mount a pressing plate swing arm. The pressing plate swing arm can rotate and slide along the third rotation groove 125. The fourth rotation groove 126 includes a seventh slide rail 1261 and two eighth slide rails 1262. The seventh slide rail 1261 is disposed on a bottom wall of the fourth rotation groove 126, and the two eighth slide rails 1262 are respectively disposed on two opposite side walls of the fourth rotation groove 126. The fourth rotation groove 126 is configured to mount a pressing plate swing arm. The pressing plate swing arm can rotate and slide along the fourth rotation groove 126.

A first rotation shaft 127 and a second rotation shaft 128 are further disposed in the fixed base 10. The first rotation shaft 127 includes a first fastening part 1271 and a first extension part 1272. The first fastening part 1271 is fastened to the first extension part 1272. In this embodiment, at least a part of the first fastening part 1271 is a flat shaft segment, and the first extension part 1272 is a round shaft. Both axial directions of the first fastening part 1271 and the first extension part 1272 are parallel to the Y direction, and an axis of the first fastening part 1271 is staggered from an axis of the first extension part 1272. The first rotation shaft 127 is mounted in the first sub-housing 12A and is arranged apart from the third rotation groove 125 in the Y direction, and the first rotation shaft 127 can rotate relative to the first sub-housing 12A. The first fastening part 1271 is located inside the first sub-housing 12A, and the first extension part 1272 extends out of the first sub-housing 12A. The first fastening part 1271 is configured to be fastened to the first auxiliary swing arm 41 in the first rotation assembly 101, and the first extension part 1272 is configured to be connected to the floating plate 80. When rotating relative to the fixed base 10, the first auxiliary swing arm 41 can drive the first fastening part 1271 to rotate and drive the first extension part 1272 to rotate, to drive the floating plate 80 to move in the Z direction.

A structure of the second rotation shaft 128 is the same as the structure of the first rotation shaft 127. The second rotation shaft 128 includes a second fastening part 1281 and a second extension part 1282. The second fastening part 1281 is fastened to the second extension part 1282. The second rotation shaft 128 is rotatably connected to the first sub-housing 12A and is arranged apart from the fourth rotation groove 126 in the Y direction, and the second rotation shaft 128 and the first rotation shaft 127 are axially symmetrical about the symmetry axis O. The second fastening part 1281 is configured to be fastened to the second auxiliary swing arm 42 in the first rotation assembly 101, and the second extension part 1282 is configured to be connected to the floating plate 80. When rotating relative to the fixed base 10, the second auxiliary swing arm 42 can drive the second fastening part 1281 to rotate and drive the second extension part 1282 to rotate, to drive, together with the first extension part 1272, the floating plate 80 to move in the Z direction.

The second sub-housing 12B and the first sub-housing 12A may be same or similar assemblies, symmetrical or partially symmetrical structures, or different structures. In this embodiment, the second sub-housing 12B includes a third rotation groove 125B, a fourth rotation groove 126B, a first rotation shaft 127B, and a second rotation shaft 128B. For basic structures of components in the second sub-housing 12B, a connection relationship between the components, and a connection relationship between the component and a component outside the assembly, refer to the related design of the first sub-housing 12A. The second sub-housing 12B and the first sub-housing 12A may be the same or different in detail structures or position arrangement of components. The third rotation groove 125B and the fourth rotation groove 126B in the second sub-housing 12B are configured to mount pressing plate swing arms. The first rotation shaft 127B in the second sub-housing 12B is configured to be fastened to the first auxiliary swing arm 41 in the second rotation assembly 102, and the second rotation shaft 128B is configured to be fastened to the second auxiliary swing arm 42.

The third sub-housing 12C and the first sub-housing 12A may be same or similar assemblies, symmetrical or partially symmetrical structures, or different structures. In this embodiment, the third sub-housing 12C includes a first rotation groove 123C, a second rotation groove 124C, a third rotation groove 125C, and a fourth rotation groove 126C. For basic structures of components in the third sub-housing 12C, a connection relationship between the components, and a connection relationship between the component and a component outside the assembly, refer to the related design of the first sub-housing 12A. The first rotation groove 123C in the third sub-housing 12C is configured to be rotatably and slidably connected to the first main swing arm 31 in the third rotation assembly 103, and the second rotation groove 124C is configured to be rotatably and slidably connected to the second main swing arm 32. The third rotation groove 125C and the fourth rotation groove 126C in the third sub-housing 12C are configured to mount pressing plate swing arms.

The fourth sub-housing 12D and the first sub-housing 12A may be same or similar assemblies, symmetrical or partially symmetrical structures, or different structures. In this embodiment, the fourth sub-housing 12D includes a first rotation groove 123D, a second rotation groove 124D, a third rotation groove 125D, and a fourth rotation groove 126D. For basic structures of components in the fourth sub-housing 12D, a connection relationship between the components, and a connection relationship between the component and a component outside the assembly, refer to the related design of the first sub-housing 12A. The first rotation groove 123D in the fourth sub-housing 12D is configured to be rotatably and slidably connected to the first main swing arm 31 in the fourth rotation assembly 104, and the second rotation groove 124D is configured to be rotatably and slidably connected to the second main swing arm 32. The third rotation groove 125D and the fourth rotation groove 126D in the fourth sub-housing 12D are configured to mount pressing plate swing arms.

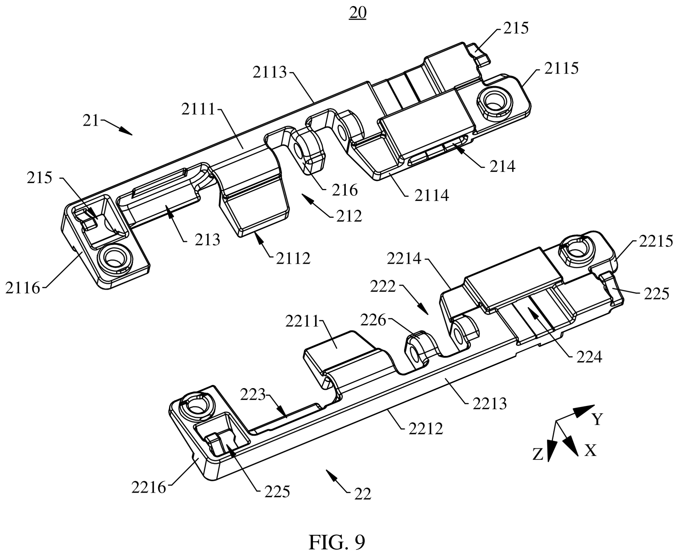

Referring to FIG. 9, FIG. 9 is a schematic diagram of an enlarged structure of the fastening plate 20 in the first rotation assembly 101 in the rotating mechanism 100 shown in FIG. 6.

The fastening plate 20 in the first rotation assembly 101 includes the first fastening plate 21 and the second fastening plate 22. The first fastening plate 21 is a strip-shaped plate-like structure with a thickness. The first fastening plate 21 includes a first upper surface 2111, a first lower surface 2112, a first side surface 2113, a second side surface 2114, a first end surface 2115, and a second end surface 2116. The first upper surface 2111 is disposed opposite to the first lower surface 2112, the first side surface 2113 is disposed opposite to the second side surface 2114, and the first end surface 2115 is disposed opposite to the second end surface 2116. Both the first side surface 2113 and the second side surface 2114 are connected between the first upper surface 2111 and the first lower surface 2112, and both the first end surface 2115 and the second end surface 2116 are connected between the first side surface 2113 and the second side surface 2114.

A first notch 212, a second notch 213, a first slide groove 214, and a first guide groove 215 are disposed in the first fastening plate 21. Both the first notch 212 and the second notch 213 are disposed on the second side surface 2114, and both the first notch 212 and the second notch 213 penetrate the first upper surface 2111 and the first lower surface 2112. A first shaft sleeve 216 is fastened to an inner wall of the first notch 212, and an axis extension direction of the first shaft sleeve 216 is parallel to the Y direction. The first shaft sleeve 216 is configured to be rotatably connected to the first main swing arm 31 in the first rotation assembly 101. The second notch 213 is configured to avoid the pressing plate assembly 3. In this embodiment, there are two first guide grooves 215. Both the two first guide grooves 215 are arc-shaped, are recessed in the first upper surface 2111, and penetrate the first side surface 2113. One of the first guide grooves 215 is located on a side of the first end surface 2115. The other first guide groove 215 is located on a side close to the second end surface 2116. The first guide groove 215 is configured to be slidably connected to the pressing plate assembly 3. The first slide groove 214 is located between the first notch 212 and the first guide groove 215 close to the first end surface 2115 and is disposed apart from the first notch 212 and the first guide groove 215, and the first slide groove 214 penetrates the first side surface 2113 and the second side surface 2114. The first slide groove 214 is configured to be slidably connected to the first auxiliary swing arm 41 in the first rotation assembly 101.

The second fastening plate 22 and the first fastening plate 21 are mirror symmetric structures, and the second fastening plate 22 and the first fastening plate 21 are axially symmetrical about the symmetry axis O. The second fastening plate 22 includes a second upper surface 2211, a second lower surface 2212, a third side surface 2213, a fourth side surface 2214, a third end surface 2215, and a fourth end surface 2216 that form an outer surface of the second fastening plate 22 through enclosure. A third notch 222, a fourth notch 223, a second slide groove 224, and a second guide groove 225 are disposed in the second fastening plate 22. A structure of the third notch 222 is the same as the structure of the first notch 212, and a second shaft sleeve 226 is disposed on an inner wall of the third notch 222. A structure of the fourth notch 223 is the same as the structure of the second notch 213, a structure of the second guide groove 225 is the same as the structure of the first guide groove 215, and a structure of the second slide groove 224 is the same as the structure of the first slide groove 214. The second shaft sleeve 226 is configured to be rotatably connected to the second main swing arm 32 in the first rotation assembly 101. The fourth notch 223 is configured to avoid the pressing plate assembly 3. The second guide groove 225 is configured to be slidably connected to the pressing plate assembly 3. The second slide groove 224 is configured to be slidably connected to the second auxiliary swing arm 42 in the first rotation assembly 101.

Structures of the fastening plates in the second rotation assembly 102, the third rotation assembly 103, and the fourth rotation assembly 104 are similar to the structure of the fastening plate in the first rotation assembly 101, and specific structures of the fastening plates may be appropriately adjusted based on types of swing arms in different rotation assemblies 1. In this embodiment, a third slide groove 231 and a fifth slide groove 232 are further disposed in the third fastening plate 23, a fourth slide groove 241 and a sixth slide groove 242 are disposed in the fourth fastening plate 24, the third slide groove 231 and the fourth slide groove 241 are configured to mount a first damping assembly, and the fifth slide groove 232 and the sixth slide groove 242 are configured to mount a second damping assembly.

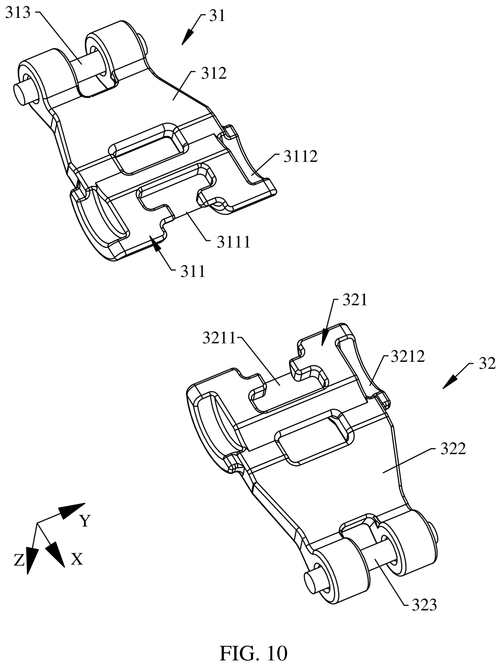

Referring to FIG. 10, FIG. 10 is a schematic diagram of a structure of the main swing arm of the first rotation assembly 101 in the rotating mechanism 100 shown in FIG. 6. FIG. 10 shows a structure of a rotation shaft.

The main swing arm in the first rotation assembly 101 includes the first main swing arm 31 and the second main swing arm 32. The first main swing arm 31 includes a first rotation body 311, a first swing body 312, and a first rotation shaft 313. The first rotation body 311 is in an arc-shaped plate-like structure. The first rotation body 311 includes a first slide part 3111 and two second slide parts 3112. The two second slide parts 3112 are respectively located on two opposite sides of the first rotation body 311 in the X direction, and the first slide part 3111 is located between the two second slide parts 3112. A structure of the first rotation body 311 matches the structure of the first rotation groove 123 of the fixed base 10, a structure of the first slide part 3111 matches the structure of the first slide rail 1231, and a structure of the second slide part 3112 matches the structure of the second slide rail 1232. The first swing body 312 is in a plate-like structure. One end of the first swing body 312 is fastened to the first rotation body 311, and the other end of the first swing body 312 is fastened to the first rotation shaft 313. An axis extension direction of the first rotation shaft 313 is parallel to the Y direction. The first main swing arm 31 is mounted in the first rotation groove 123 and is configured to be rotatably and slidably connected to the fixed base 10 and rotatably connected to the first fastening plate 21.

A structure of the second main swing arm 32 is the same as the structure of the first main swing arm 31. The second main swing arm 32 includes a second rotation body 321, a second swing body 322, and a second rotation shaft 323. A third slide part 3211 and two fourth slide parts 3212 are disposed in the second rotation body 321. A structure of the second rotation body 321 is the same as the structure of the first rotation body 311, a structure of the second swing body 322 is the same as the structure of the first swing body 312, and a structure of the second rotation shaft 323 is the same as the structure of the first rotation shaft 313. The second main swing arm 32 is mounted in the second rotation groove 124 of the fixed base 10 and is configured to be rotatably and slidably connected to the fixed base 10 and rotatably connected to the second fastening plate 22.

A structure of a main swing arm in the third rotation assembly 103 and a structure of a main swing arm in the fourth rotation assembly 104 are the same as or similar to the structure of the main swing arm in the first rotation assembly 101. Details are not described herein.

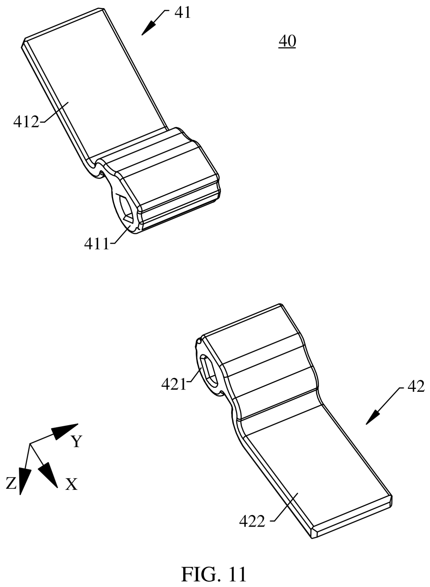

Referring to FIG. 11, FIG. 11 is a schematic diagram of an enlarged structure of the auxiliary swing arm of the first rotation assembly 101 in the rotating mechanism 100 shown in FIG. 6.

The auxiliary swing arm 40 of the first rotation assembly 101 includes the first auxiliary swing arm 41 and the second auxiliary swing arm 42. The first auxiliary swing arm 41 includes a first auxiliary shaft seat 411 and a first auxiliary swing body 412. The first auxiliary swing body 412 is in a plate-like structure. The first auxiliary shaft seat 411 is fastened to the first auxiliary swing body 412, and an axis extension direction of the first auxiliary shaft seat 411 is parallel to the Y direction. The first auxiliary swing arm 41 is configured to be rotatably connected to the fixed base 10 and slidably and rotatably connected to the first fastening plate 21. A structure of the second auxiliary swing arm 42 is the same as the structure of the first auxiliary swing arm 41. The second auxiliary swing arm 42 includes a second auxiliary shaft seat 421 and a second auxiliary swing body 422. A structure of the second auxiliary shaft seat 421 is the same as the structure of the first auxiliary shaft seat 411, and a structure of the second auxiliary swing body 422 is the same as the structure of the first auxiliary swing body 412. The second auxiliary swing arm 42 is configured to be rotatably connected to the fixed base 10 and slidably and rotatably connected to the second fastening plate 22.

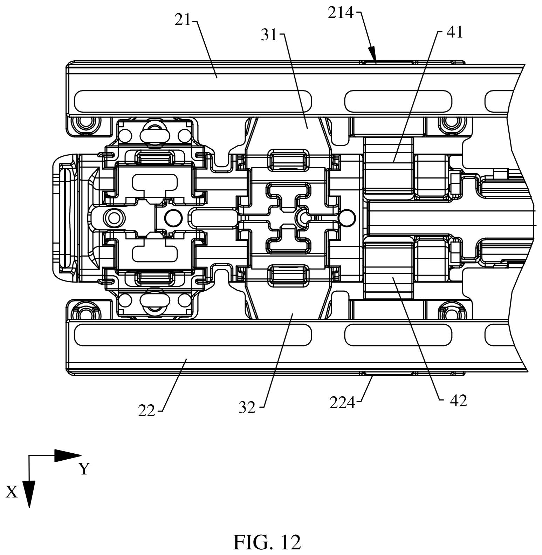

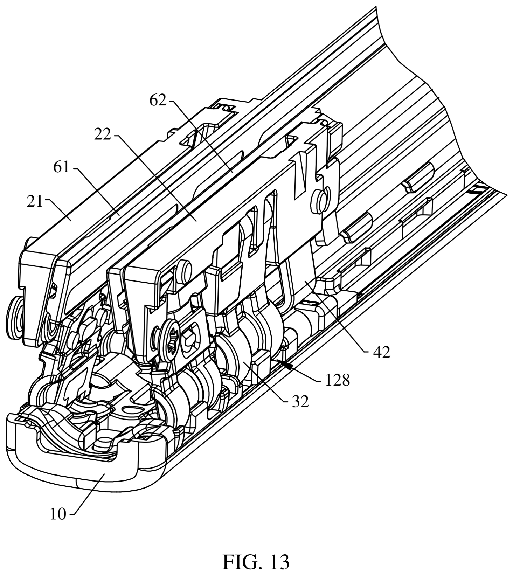

Referring to FIG. 12 and FIG. 13 together, FIG. 12 is a schematic diagram of a partial structure of the rotating mechanism 100 shown in FIG. 5 in the flattened state, and FIG. 13 is a schematic diagram of a partial structure of the rotating mechanism 100 shown in FIG. 12 in the folded state.

The first fastening plate 21, the first main swing arm 31, and the first auxiliary swing arm 41 are located on one side of the fixed base 10, to be specific, located in an X-axis negative direction, and the second fastening plate 22, the second main swing arm 32, and the second auxiliary swing arm 42 are located on the other side of the fixed base 10, to be specific, in an X-axis positive direction. The first rotation body 311 of the first main swing arm 31 is mounted in the first rotation groove 123, the first slide part 3111 is mounted in the first slide rail 1231, and the second slide part 3112 is mounted in the second slide rail 1232. The first rotation body 311 can slide and rotate in the first rotation groove 123 along the first slide rail 1231 and the second slide rail 1232. The first rotation shaft 313 is mounted in the first shaft sleeve 216 of the first fastening plate 21, and the first rotation shaft 313 can rotate in the first shaft sleeve 216. The first auxiliary swing arm 41 is arranged apart from the first main swing arm 31 in the Y direction. The first auxiliary shaft seat 411 is mounted on the first rotation shaft 127, and the first auxiliary swing body 412 is mounted in the first slide groove 214 and can slide and rotate in the first slide groove 214. The first fastening plate 21 is fastened to the first housing 210.

The second main swing arm 32 and the first main swing arm 31 are disposed side by side in the X direction, and the second auxiliary swing arm 42 and the first auxiliary swing arm 41 are disposed side by side in the X direction. The second rotation body 321 of the second main swing arm 32 is mounted in the second rotation groove 124, the third slide part 3211 is mounted in the third slide rail 1241, and the fourth slide part 3212 is mounted in the fourth slide rail 1242. The second rotation body 321 can slide and rotate in the fourth rotation groove 126 along the third slide rail 1241 and the fourth slide rail 1242. The second rotation shaft 323 is mounted in the second shaft sleeve 226 of the second fastening plate 22, and the second rotation shaft 323 can rotate in the second shaft sleeve 226. The second auxiliary swing arm 42 is arranged apart from the second main swing arm 32 in the Y direction. The second auxiliary shaft seat 421 is mounted on the second rotation shaft 128, and the second auxiliary swing body 422 is mounted in the second slide groove 224 and can slide and rotate in the second slide groove 224. The second fastening plate 22 is fastened to the second housing 220.

When rotating relative to the fixed base 10, the first housing 210 can drive the first fastening plate 21 to rotate relative to the fixed base 10, to drive the first main swing arm 31 to rotate, and enable the first rotation shaft 313 to rotate in the first sleeve 216 and enable the first rotation body 311 to rotate in the first rotation groove 123. In addition, the first fastening plate 21 further drives the first auxiliary swing arm 41 to rotate, and enables the first auxiliary swing body 412 to slide in the first slide groove 214 and enables the first auxiliary shaft seat 411 to drive the first rotation shaft 127 to rotate relative to the fixed base 10. When rotating relative to the fixed base 10, the second housing 220 can drive the second fastening plate 22 to rotate relative to the fixed base 10, to drive the second main swing arm 32 to rotate, and enable the second rotation shaft 323 to rotate in the second shaft sleeve 226 and enable the second rotation body 321 to rotate in the second rotation groove 124. In addition, the second fastening plate 22 further drives the second auxiliary swing arm 42 to rotate, and enables the second auxiliary swing body 422 to slide in the second slide groove 224 and enables the second auxiliary shaft seat 421 to rotate relative to the second rotation shaft 128. A rotation direction of the first fastening plate 21 is opposite to a rotation direction of the second fastening plate 22, a rotation direction of the first main swing arm 31 is opposite to a rotation direction of the second main swing arm 32, and a rotation direction of the first auxiliary swing arm 41 is opposite to a rotation direction of the second auxiliary swing arm 42.

For example, when the rotating mechanism 100 switches from the flattened state to the folded state, the first fastening plate 21, the first main swing arm 31, and the first auxiliary swing arm 41 rotate clockwise, and the second fastening plate 22, the second main swing arm 32, and the second auxiliary swing arm 42 rotate counterclockwise. When the rotating mechanism 100 switches from the folded state to the flattened state, the first fastening plate 21, the first main swing arm 31, and the first auxiliary swing arm 41 rotate counterclockwise, and the second fastening plate 22, the second main swing arm 32, and the second auxiliary swing arm 42 rotate clockwise.

In this embodiment, the first fastening plate 21 and the second fastening plate 22 are disposed; and the first fastening plate 21 is enabled to be fastened to the first housing 210, and the second fastening plate 22 is enabled to be fastened to the second housing 220, so that strength of connection between the fastening plate 20 and the housings can be improved, thereby improving rotation stability of the foldable electronic device 500. In addition, the first main swing arm 31 and the second main swing arm 32 are disposed, so that the first fastening plate 21 and the second fastening plate 22 can rotate relative to the fixed base 10. In addition, the first auxiliary swing arm 41 is disposed, so that when rotating relative to the fixed base 10, the first fastening plate 21 drives the first auxiliary swing arm 41 to rotate together with the first main swing arm 31, to implement rotation of the first fastening plate 21 relative to the fixed base 10, thereby improving rotation stability of the first fastening plate 21. The second auxiliary swing arm 42 is disposed, so that when rotating relative to the fixed base 10, the second fastening plate 22 drives the second auxiliary swing arm 42 to rotate together with the second main swing arm 32, to implement rotation of the second fastening plate 22 relative to the fixed base 10, thereby improving rotation stability of the second fastening plate 22.

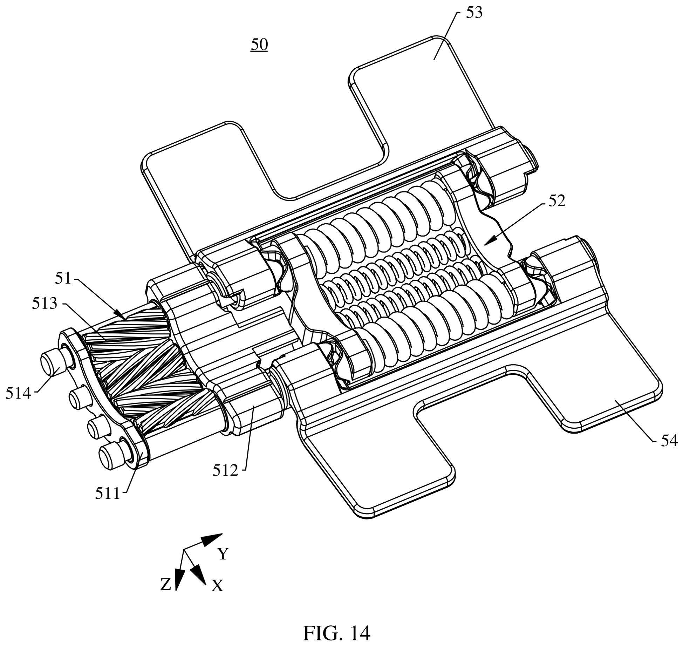

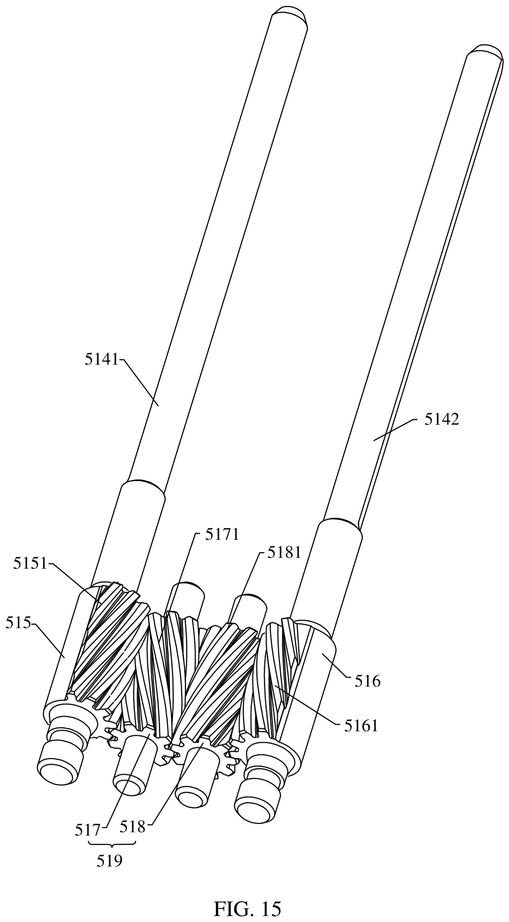

Referring to FIG. 14 and FIG. 15, FIG. 14 is a schematic diagram of a structure of the first synchronization assembly 201 in the rotating mechanism 100 shown in FIG. 6, and FIG. 15 is a schematic diagram of a partially enlarged structure of the first synchronization assembly 201 shown in FIG. 14.

The first synchronization assembly 201 includes the synchronization member 51, the damping member 52, a first synchronization swing arm 53, and a second synchronization swing arm 54. Both the first synchronization swing arm 53 and the second synchronization swing arm 54 are hinged to the damping member 52, and the first synchronization swing arm 53 and the second synchronization swing arm 54 are respectively located on two opposite sides of the damping member 52 in the X direction. The synchronization member 51 is fastened to the first synchronization swing arm 53 and the second synchronization swing arm 54. When rotating, the first synchronization swing arm 53 drives the synchronization member 51 to rotate, to drive the second synchronization swing arm 54 to rotate, to implement synchronous movement of the first synchronization swing arm 53 and the second synchronization swing arm 54. In addition, when rotating, the first synchronization swing arm 53 and the second synchronization swing arm 54 abut against the damping member 52, so that the damping member 52 generates a damping force, thereby providing a damping feel for rotation of the rotating mechanism 100.

The synchronization member 51 includes a first mounting plate 511, a second mounting plate 512, a synchronization gear 513, and a rotation lever 514. The first mounting plate 511 is disposed side by side with and apart from the second mounting plate 512 in the Y direction. The synchronization gear 513 is mounted between the first mounting plate 511 and the second mounting plate 512 and is rotatably connected to the first mounting plate 511 and the second mounting plate 512. The rotation lever 514 is fastened to the synchronization gear 513.

The synchronization gear 513 includes a first gear 515, a second gear 516, and an intermediate gear 519. The first gear 515, the intermediate gear 519, and the second gear 516 are mounted between the first mounting plate 511 and the second mounting plate 512 side by side in the X direction and are rotatably connected to the first mounting plate 511 and the second mounting plate 512, and axial directions of the first gear 515, the intermediate gear 519, and the second gear 516 are all parallel to the Y direction. The intermediate gear 519 is located between the first gear 515 and the second gear 516 and engages with the first gear 515 and the second gear 516. In this embodiment, there are two intermediate gears 519, and the two intermediate gears 519 are respectively a third gear 517 and a fourth gear 518. When rotating, the first gear 515 drives the intermediate gear 519 to rotate, to drive the second gear 516 to rotate. A rotation direction of the first gear 515 is opposite to a rotation direction of the second gear 516.

A plurality of first teeth 5151 are disposed on an outer peripheral surface of the first gear 515, and the plurality of first teeth 5151 are arranged apart and in parallel. In this embodiment, the first teeth 5151 are distributed on a part of the outer peripheral surface of the first gear 515. To be specific, a surface on which an axis of the first gear 515 is located is used as a boundary, the first teeth 5151 are disposed on a part of the outer peripheral surface of the first gear 515, and no first tooth 5151 is disposed on a part of the outer peripheral surface of the first gear 515. In another embodiment, the first teeth 5151 may alternatively be distributed on the entire outer peripheral surface of the first gear 515 around the axis of the first gear 515, in other words, the first teeth 5151 surround the outer peripheral surface of the first gear 515. The first tooth 5151 is a helical tooth. A tangent direction of the first tooth 5151 intersects with an axial direction of the first gear 515. In this embodiment, the first tooth 5151 is helical, and a helix angle of the first tooth 5151 is 15° to 45°. In other words, an angle between the tangent direction of the first tooth 5151 and the axial direction of the first gear 515 is 15° to 45°. It may be understood that the first gear 515 is a helical gear. The "helical gear" herein is a gear whose angle between a tooth extension direction and an axial direction is greater than 0°.

A plurality of second teeth 5161 are disposed on an outer peripheral surface of the second gear 516. Shapes of the plurality of second teeth 5161 are helical. A difference between the second tooth 5161 and the first tooth 5151 lies in that a helical direction of the second tooth 5161 is opposite to a helical direction of the first tooth 5151. The first gear 515 and the second gear 516 are respectively located on two opposite sides of the synchronization gear 513 in the X direction, and the first tooth 5151 is disposed opposite to the second tooth 5161.

A plurality of third teeth 5171 are disposed on an outer peripheral surface of the third gear 517. A shape of the third tooth 5171 is helical. A difference between the third teeth 5171 and the second teeth 5161 lies in that the third teeth 5171 surround the outer peripheral surface of the third gear 517. A plurality of fourth teeth 5181 are disposed on an outer peripheral surface of the fourth gear 518. Shapes of the plurality of fourth teeth 5181 are helical. A difference between the fourth tooth 5181 and the third tooth 5171 lies in that a helical direction of the fourth tooth 5181 is opposite to a helical direction of the third tooth 5171.

The first gear 515, the third gear 517, the fourth gear 518, and the second gear 516 are sequentially disposed side by side and in parallel in the X direction. The first gear 515 engages with the third gear 517, the third gear 517 engages with the fourth gear 518, and the fourth gear 518 engages with the second gear 516. The helical direction of the first tooth 5151 is the same as the helical direction of the fourth tooth 5181, and a rotation direction of the first gear 515 is the same as a rotation direction of the fourth gear 518. The helical direction of the second gear 516 is the same as the helical direction of the third gear 517, and a rotation direction of the second gear 516 is the same as a rotation direction of the third gear 517. When rotating, the first gear 515 drives, through the first teeth 5151, the third gear 517 to rotate; then, the third gear 517 drives, through the third teeth 5171, the fourth gear 518 to rotate; and then, the fourth gear 518 drives, through the fourth teeth 5181, the second gear 516 to rotate, thereby implementing synchronous rotation of the first gear 515, the second gear 516, the third gear 517, and the fourth gear 518.

In this embodiment, a contact ratio between two adjacent gears is greater than 1.2. To be specific, a contact ratio between the first gear 515 and the third gear 517 is greater than 1.2, a contact ratio between the third gear 517 and the fourth gear 518 is greater than 1.2, and a contact ratio between the second gear 516 and the fourth gear 518 is greater than 1.2.

It should be noted that a calculation formula of the contact ratio ε_{γ} is ε_{γ}=ε_{α}+ε_{β}. ε_{α} is a transverse contact ratio, and ε_{β} is a longitudinal contact ratio. A calculation formula of the transverse contact ratio ε_{α} is ε_{α}=1/2π[z₁(tanαₐₜ₁-tanα'ₜ)±z₂(tanαₐₜ₂-tanα'ₜ)]. A calculation formula of the longitudinal contact ratio ε_{β} is ε_{β}=bsinβ/πmₙ. z₁ and z₂ are tooth quantities of gears, αₐₜ₁ and αₐₜ₁ are tooth tip circle pressure angles, α'ₜ is a transverse reference circle working pressure angle, β is a helix angle, and b is a gear width, and mₙ is a normal module.

In this embodiment, the synchronization gear 513 is disposed as a helical gear, so that a longitudinal contact ratio ε_{β} of the synchronization gear 513 is increased, to increase the contact ratio ε_{γ} between two adjacent gears, thereby improving rotation stability of the synchronization gear 513, and improving transmission stability of the synchronization assembly 2 and rotation stability of the rotating mechanism 100. In addition, an impact resistance capability and a bearing capability of the synchronization assembly 2 can be further improved, a life of the synchronization assembly 2 can be further prolonged, and durability of the rotating mechanism 100 can be further improved. In addition, in this embodiment, the helix angle β and the gear width b are adjusted, so that the longitudinal contact ratio ε_{β} and the contact ratio ε_{γ} of the synchronization gear 513 can be increased, to enable more teeth in the synchronization gear 513 to participate in engagement, thereby further improving rotation stability of the synchronization gear 513, and preventing a tooth root from being broken.

In this embodiment, after the longitudinal contact ratio ε_{β} of the synchronization gear 513 is increased, when a continuous transmission condition is met, a requirement for the transverse contact ratio ε_{α} may be appropriately reduced based on an actual application scenario, for example, a gear module is increased and a tooth quantity of the gear is reduced, so that a diameter of the gear can be reduced, and a thickness of the rotating mechanism 100 in the folded state can be reduced, thereby implementing lightness and thinness of the foldable electronic device 500. In addition, increasing the gear module and reducing the tooth quantity of the gear further help improve strength of the tooth root. In addition, the synchronization gear 513 in this embodiment may alternatively have stunt teeth. A helix angle of the gear is adjusted and a minimum tooth quantity of root cutting is reduced, to increase the gear module, improve a bending resistance capability of the tooth root, and improve durability of the synchronization gear 513.

A center distance of the synchronization swing arm is a=(mₙz₁+mₙz₂)/cosβ. In this embodiment, the helix angle β of the gear is adjusted, so that the center distance a of the synchronization swing arm can be adjusted.

The rotation lever 514 includes a first rotation lever 5141 and a second rotation lever 5142. The first rotation lever 5141 is fastened to the first gear 515 and penetrates the second mounting plate 512 to extend in a direction away from the second mounting plate 512, and an extension direction of the first rotation lever 5141 is parallel to the Y direction. The second rotation lever 5142 is fastened to the second gear 516 and penetrates the second mounting plate 512 to extend in a direction away from the second mounting plate 512, and the second rotation lever 5142 is disposed parallel to and apart from the first rotation lever 5141. In this embodiment, both the first rotation lever 5141 and the second rotation lever 5142 are flat shafts, to implement fastening between the first rotation lever 5141 and the first synchronization swing arm 53 and fastening between the second rotation lever 5142 and the second synchronization swing arm 54.

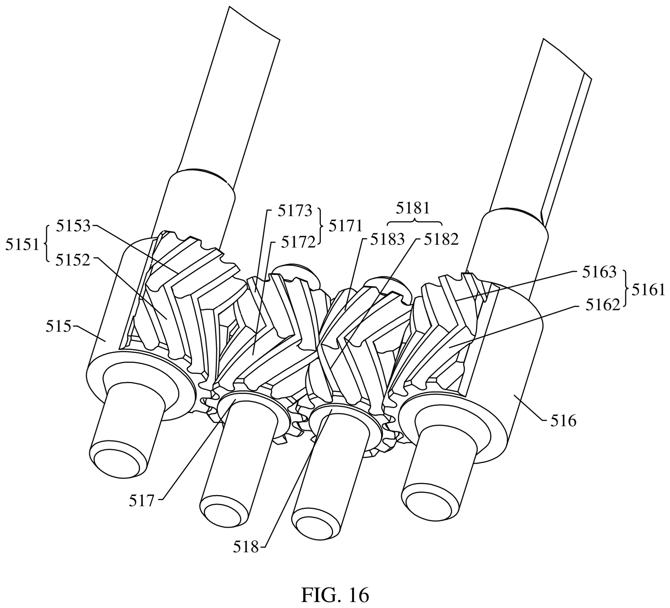

Referring to FIG. 16, FIG. 16 is a schematic diagram of a partial structure of the first synchronization assembly 201 shown in FIG. 14 in another implementation.

A difference between this implementation and the implementation shown in FIG. 15 lies in that in this implementation, teeth of the first gear 515, the second gear 516, the third gear 517, and the fourth gear 518 are all "V"-shaped teeth. A plurality of first teeth 5151 arranged apart and in parallel are disposed on an outer periphery of the first gear 515. Each first tooth 5151 includes one first sub-tooth 5152 and one second sub-tooth 5153. A plurality of first sub-teeth 5152 are disposed in parallel and apart. The first sub-tooth 5152 has a first helix angle, and the first helix angle is 15° to 45°. A plurality of second sub-teeth 5153 are disposed in parallel and apart. The second sub-tooth 5153 has a second helix angle, and the second helix angle is 15° to 45°. Each first sub-tooth 5152 is fastened to a corresponding second sub-tooth 5153 to form a "V"-shaped structure, and the first sub-tooth 5152 and the second sub-tooth 5153 are symmetrically disposed relative to a radial direction of the first gear 515.

Second teeth 5161 are disposed on an outer peripheral surface of the second gear 516. A shape of the second tooth 5161 is similar to the shape of the first tooth 5151. The second tooth 5161 includes a third sub-tooth 5162 and a fourth sub-tooth 5163. The third sub-tooth 5162 is opposite to the first sub-tooth 5152, and a helical direction of the third sub-tooth 5162 is opposite to a helical direction of the first sub-tooth 5152. The fourth sub-tooth 5163 is opposite to the second sub-tooth 5153, and a helical direction of the fourth sub-tooth 5163 is opposite to a helical direction of the second sub-tooth 5153.

Third teeth 5171 are disposed on an outer peripheral surface of the third gear 517. The third tooth 5171 includes a fifth sub-tooth 5172 and a sixth sub-tooth 5173. A structure of the third tooth 5171 is the same as the structure of the first tooth 5151. The third teeth 5171 surround the outer peripheral surface of the third gear 517. Fourth teeth 5181 are disposed on an outer peripheral surface of the fourth gear 518. The fourth tooth 5181 includes a seventh sub-tooth 5182 and an eighth sub-tooth 5183. A structure of the fourth tooth 5181 is similar to the structure of the third tooth 5171. A difference between the fourth tooth 5181 and the third tooth 5171 lies in that a helical direction of the seventh sub-tooth 5182 is opposite to a helical direction of the fifth sub-tooth 5172, and a helical direction of the eighth sub-tooth 5183 is opposite to a helical direction of the sixth sub-tooth 5173.

The first gear 515, the third gear 517, the fourth gear 518, and the second gear 516 are sequentially disposed side by side and in parallel in the X direction. The first gear 515 engages with the third gear 517, the first sub-tooth 5152 engages with the fifth sub-tooth 5172, and the second sub-tooth 5153 engages with the sixth sub-tooth 5173. The third gear 517 engages with the fourth gear 518, the fifth sub-tooth 5172 engages with the seventh sub-tooth 5182, and the sixth sub-tooth 5173 engages with the eighth sub-tooth 5183. The fourth gear 518 engages with the second gear 516, the seventh sub-tooth 5182 engages with the third sub-tooth 5162, and the eighth sub-tooth 5183 engages with the fourth sub-tooth 5163. When rotating, the first gear 515 drives, through the first sub-tooth 5152, the fifth sub-tooth 5172 to move, and drives, through the second sub-tooth 5153, the sixth sub-tooth 5173 to move, to drive the third gear 517 to rotate; when rotating, the third gear 517 drives, through the fifth sub-tooth 5172, the seventh sub-tooth 5182 to move, and drives, through the sixth sub-tooth 5173, the eighth sub-tooth 5183 to move, to drive the fourth gear 518 to rotate; and when rotating, the fourth gear 518 drives, through the seventh sub-tooth 5182, the third sub-tooth 5162 to move, and drives, through the eighth sub-tooth 5183, the fourth sub-tooth 5163 to move, to drive the second gear 516 to rotate, thereby implementing synchronous rotation of the first gear 515, the second gear 516, the third gear 517, and the fourth gear 518.

It should be noted that, when the first gear 515 drives the third gear 517 to rotate, Y-direction component forces of a force received by the first sub-tooth 5152 and the second sub-tooth 5153 are in opposite directions and therefore can cancel each other out, to reduce an axial force of the first gear 515. Similarly, effects on the third sub-tooth 5162 and the fourth sub-tooth 5163 in the second gear 516 in the Y direction can also cancel each other out, to reduce an axial force of the second gear 516. Effects on the fifth sub-tooth 5172 and the sixth sub-tooth 5173 in the third gear 517 in the Y direction can also cancel each other out, to reduce an axial force of the third gear 517. Effects on the seventh sub-tooth 5182 and the eighth sub-tooth 5183 in the fourth gear 518 in the Y direction can also cancel each other out, to reduce an axial force of the fourth gear 518.

In this embodiment, teeth of the synchronization gear 513 are disposed to be "V"-shaped, so that an axial force of the synchronization gear 513 during rotation can be reduced, thereby further improving rotation stability of the synchronization gear 513, and improving transmission stability of the synchronization assembly 2 and rotation stability of the rotating mechanism 100.

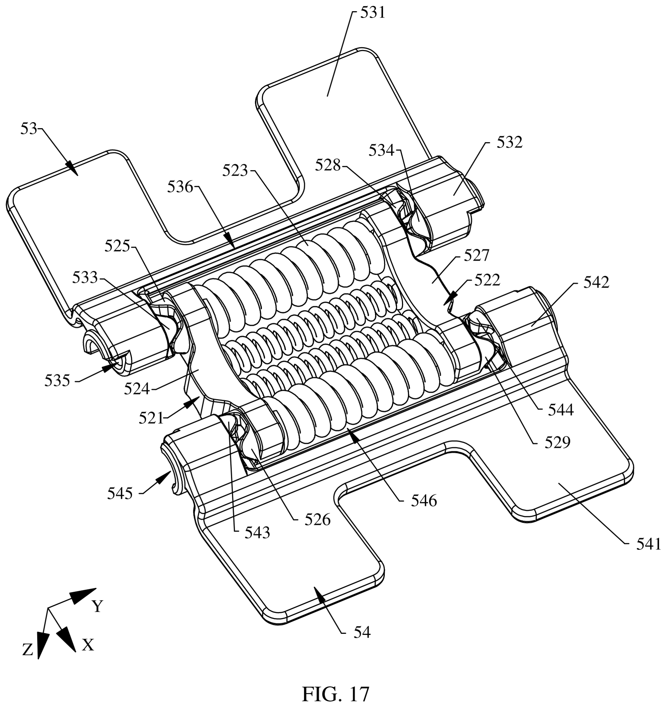

Referring to FIG. 17, FIG. 17 is a schematic diagram of a partial structure of the first synchronization assembly 201 shown in FIG. 14.

The first synchronization swing arm 53 includes a first synchronization swing body 531, a first synchronization shaft seat 532, a first hinge body 533, and a third hinge body 534. The first synchronization shaft seat 532 is connected to one end of the first synchronization swing body 531. A first rotation hole 535 is disposed in the first synchronization shaft seat 532, and an extension direction of the first rotation hole 535 is parallel to the Y direction. A first receiving notch 536 is disposed in the first synchronization shaft seat 532. The first receiving notch 536 is located in a middle part of the first synchronization shaft seat 532. Both the first hinge body 533 and the third hinge body 534 are fastened to the first synchronization shaft seat 532 and face the first receiving notch 536. The first hinge body 533 includes protrusions and a plurality of recesses (not marked in the figure), and the plurality of protrusions and the plurality of recesses are alternately arranged in a peripheral direction of the first rotation hole 535. A structure of the third hinge body 534 is the same as the structure of the first hinge body 533.

A structure of the second synchronization swing arm 54 is the same as the structure of the first synchronization swing arm 53, and the second synchronization swing arm 54 and the first synchronization swing arm 53 are symmetrical structures. The second synchronization swing arm 54 includes a second synchronization swing body 541, a second synchronization shaft seat 542, a second hinge body 543, and a fourth hinge body 544. A second rotation hole 545 is disposed in the second synchronization shaft seat 542, and an extension direction of the second rotation hole 545 is parallel to the Y direction. A second receiving notch 546 is disposed in the second synchronization shaft seat 542. Both the second hinge body 543 and the fourth hinge body 544 are fastened to the second synchronization shaft seat 542 and face the second receiving notch 546. Both a structure of the second hinge body 543 and a structure of the fourth hinge body 544 are the same as the structure of the first hinge body 533.

The damping member 52 includes a first baffle plate 521, a second baffle plate 522, and a damping spring 523. The first baffle plate 521 includes a first body 524, a first hinge seat 525, and a second hinge seat 526. The first hinge seat 525 and the second hinge seat 526 are disposed apart on a surface of the first body 524. A structure of the first hinge seat 525 matches the structure of the first hinge body 533, and a structure of the second hinge seat 526 matches the structure of the second hinge body 543. A structure of the second baffle plate 522 is the same as the structure of the first baffle plate 521. The second baffle plate 522 includes a second body 527, a third hinge seat 528, and a fourth hinge seat 529. A structure of the third hinge seat 528 matches the structure of the third hinge body 534, and a structure of the fourth hinge seat 529 matches the structure of the fourth hinge body 544. The first baffle plate 521 and the second baffle plate 522 are disposed apart and in parallel in the Y direction. A surface that is of the first baffle plate 521 and that faces away from the first hinge seat 525 is opposite to a surface that is of the second baffle plate 522 and that faces away from the third hinge seat 528. In this embodiment, there are four damping springs 523. In another embodiment, there may alternatively be two damping springs 523, three damping springs 523, or at least five damping springs 523. The damping spring 523 is mounted between the first baffle plate 521 and the second baffle plate 522 and is fastened to the first baffle plate 521 and the second baffle plate 522.

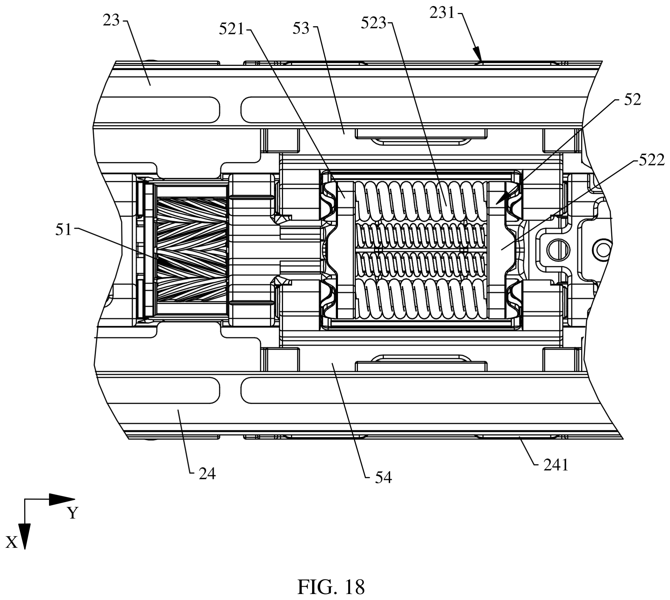

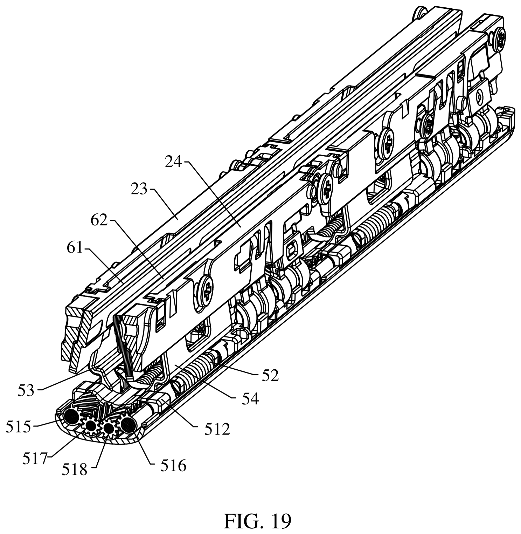

Referring to FIG. 18 and FIG. 19 together, FIG. 18 is a schematic diagram of a partial structure of the rotating mechanism 100 shown in FIG. 5 in the flattened state, and FIG. 19 is a schematic diagram of a partial structure of the rotating mechanism 100 shown in FIG. 5 in the folded state.

The first synchronization assembly 201 is mounted in the fixed base 10, and the first synchronization swing arm 53 and the second synchronization swing arm 54 are respectively located on two opposite sides of the fixed base 10 in the X direction. The first synchronization swing body 531 is mounted in the third slide groove 231 of the third fastening plate 23 in the second rotation assembly 102, and the first synchronization swing body 531 can slide along the third slide groove 231. The second synchronization swing body 541 is mounted in the fourth slide groove 241 of the fourth fastening plate 24, and the second synchronization swing body 541 can slide along the fourth slide groove 241. The damping member 52 is mounted in the fixed base 10 and is located between the first synchronization swing arm 53 and the second synchronization swing arm 54. The first hinge body 533 is hinged to the first hinge seat 525, the third hinge body 534 is hinged to the third hinge seat 528, the second hinge body 543 is hinged to the second hinge seat 526, and the fourth hinge body 544 is hinged to the fourth hinge seat 529. The synchronization member 51 is mounted in the fixed base 10, and the first mounting plate 511 and the second mounting plate 512 are fastened to the fixed base 10. The first rotation lever 5141 is located in the first rotation hole 535 and is fastened to the first synchronization shaft seat 532. The second rotation lever 5142 is located in the second rotation hole 545 and is fastened to the second synchronization shaft seat 542.

When rotating, the third fastening plate 23 drives the first synchronization swing arm 53 to rotate and enables the first synchronization swing body 531 of the first synchronization swing arm 53 to slide and rotate in the third slide groove 231. When rotating, the first synchronization swing arm 53 drives the first rotation lever 5141 to synchronously rotate, to drive the first gear 515 to rotate. When rotating, the first gear 515 drives the intermediate gear 519 to rotate, to drive the second gear 516 to rotate. When rotating, the second gear 516 drives the second rotation lever 5142 to rotate, to drive the second synchronization swing arm 54 to rotate and drive the fourth fastening plate 24 to rotate, and enable the second synchronization swing body 541 to slide and rotate in the fourth slide groove 241, thereby implementing synchronous rotation of the first synchronization swing arm 53 and the second synchronization swing arm 54 and synchronous rotation of the third fastening plate 23 and the fourth fastening plate 24.

In addition, when rotating, the first synchronization swing arm 53 drives the first hinge body 533 and the third hinge body 534 to synchronously rotate. When rotating, the first hinge body 533 repeatedly pushes the first hinge seat 525 to move in the Y direction, and drives the first baffle plate 521 to move. When rotating, the third hinge body 534 repeatedly pushes the third hinge seat 528 to move in the Y direction, and drives the second baffle plate 522 to move. A movement direction of the first baffle plate 521 is opposite to a movement direction of the second baffle plate 522, and then the damping spring 523 is compressed, so that the damping spring 523 generates an elastic force. An elastic restoring force of the damping spring 523 is applied to the first hinge seat 525 and the third hinge seat 528, so that the first hinge seat 525 squeezes the first hinge body 533, and the third hinge seat 528 squeezes the third hinge body 534, to provide a damping force for rotation of the first synchronization swing arm 53. The damping force of the first synchronization swing arm 53 is applied to the first housing 210 through the third fastening plate 23, to provide a damping feel for a user.

When rotating, the second synchronization swing arm 54 drives the second hinge body 543 and the fourth hinge body 544 to synchronously rotate. When rotating, the second hinge body 543 repeatedly pushes the second hinge seat 526 to move in the Y direction, and drives the first baffle plate 521 to move. When rotating, the fourth hinge body 544 repeatedly pushes the fourth hinge seat 529 to move in the Y direction, and drives the second baffle plate 522 to move. A movement direction of the first baffle plate 521 is opposite to a movement direction of the second baffle plate 522, and then the damping spring 523 is compressed, so that the damping spring 523 generates an elastic force. An elastic restoring force of the damping spring 523 is applied to the second hinge seat 526 and the fourth hinge seat 529, so that the second hinge seat 526 squeezes the second hinge body 543, and the fourth hinge seat 529 squeezes the fourth hinge body 544, to provide a damping force for rotation of the second synchronization swing arm 54. The damping force of the second synchronization swing arm 54 is applied to the second housing 220 through the fourth fastening plate 24, to provide a damping feel for a user.

A rotation direction of the first synchronization swing arm 53 is opposite to a rotation direction of the second synchronization swing arm 54. For example, when the rotating mechanism 100 switches from the flattened state to the folded state, the third fastening plate 23, the first synchronization swing arm 53, and the first rotation lever 5141 rotate clockwise, and the fourth fastening plate 24, the second synchronization swing arm 54, and the second rotation lever 5142 rotate counterclockwise. When the rotating mechanism 100 switches from the folded state to the flattened state, the third fastening plate 23, the first synchronization swing arm 53, and the first rotation lever 5141 rotate counterclockwise, and the fourth fastening plate 24, the second synchronization swing arm 54, and the second rotation lever 5142 rotate clockwise.

In this embodiment, the synchronization member 51 is disposed, and when rotating, the first synchronization swing arm 53 can drive, through the synchronization member 51, the second synchronization swing arm 54 to rotate, so that synchronous rotation of the first synchronization swing arm 53 and the second synchronization swing arm 54 can be implemented, thereby implementing synchronous rotation of the rotating mechanism 100 and the foldable electronic device 500. In addition, in this embodiment, the synchronization gear 513 is disposed to have helical teeth, so that a contact ratio of the synchronization gear 513 is increased, thereby improving transmission stability of the synchronization assembly 2 and rotation stability of the rotating mechanism 100. In addition, a tooth root can be further prevented from being broken, thereby improving durability of the synchronization gear 513.

In addition, in this embodiment, the damping member 52 is disposed, and when the first synchronization swing arm 53 and the second synchronization swing arm 54 rotate relative to the fixed base 10, the damping member 52 always abuts against the first synchronization swing arm 53 and the second synchronization swing arm 54, to generate a damping force, thereby providing a damping feel for a user, and improving use experience of the user.

The structure of the second synchronization assembly 202 is the same as the structure of the first synchronization assembly 201. A first synchronization swing arm 53 in the second synchronization assembly 202 is mounted in the fifth slide groove 232, and a second synchronization swing arm 54 is mounted in the sixth slide groove 242. For basic structures of components in the second synchronization assembly 202, a connection relationship between the components, and a connection relationship between the component and a component outside the assembly, refer to the related design of the first synchronization assembly 201. Details are not described herein.

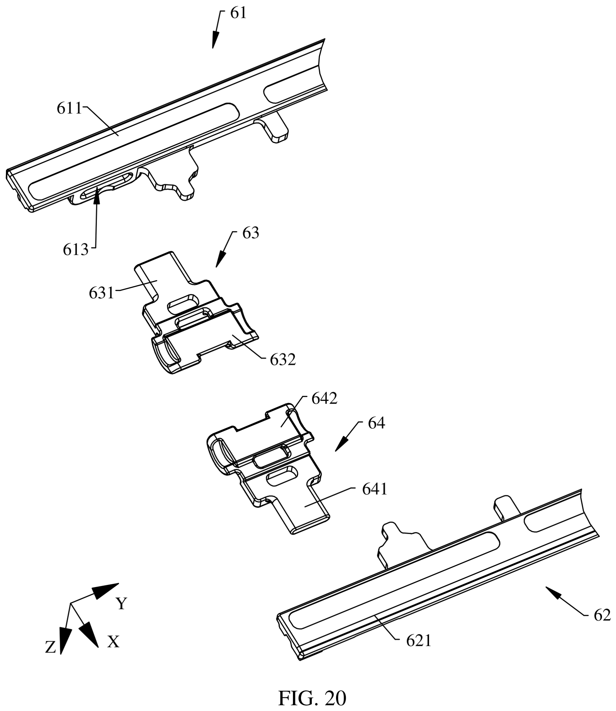

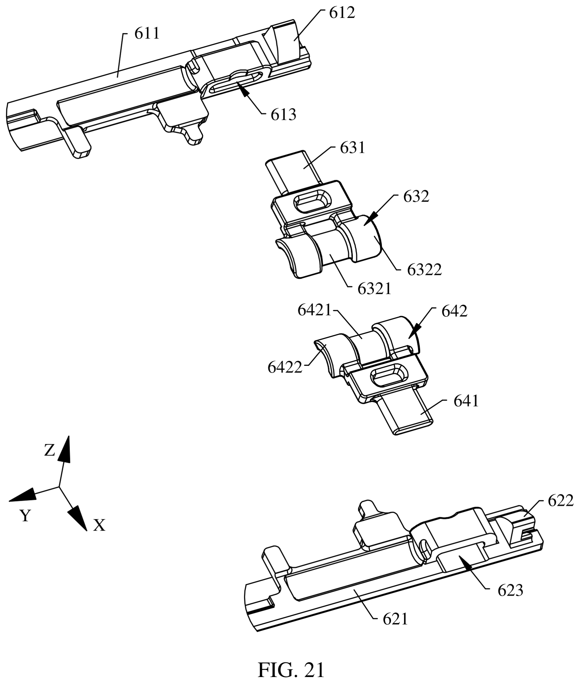

Referring to FIG. 20 and FIG. 21, FIG. 20 is a schematic diagram of a partial exploded structure of the pressing plate assembly 3 in the rotating mechanism 100 shown in FIG. 6, and FIG. 21 is a schematic diagram of an exploded structure of the pressing plate assembly 3 shown in FIG. 20 at another angle.

The pressing plate assembly 3 includes a first pressing plate 61, a second pressing plate 62, a first pressing plate swing arm 63, and a second pressing plate swing arm 64. The first pressing plate 61 is rotatably and slidably connected to the first fastening plate 21 of the first rotation assembly 101, the first fastening plate 21A of the second rotation assembly 102, the first fastening plate 21C of the third rotation assembly 103, and the first fastening plate 21D of the fourth rotation assembly 104. The second pressing plate 62 is rotatably and slidably connected to the second fastening plate 22 of the first rotation assembly 101, the second fastening plate 22A of the second rotation assembly 102, the second fastening plate 22B of the third rotation assembly 103, and the second fastening plate 22C of the fourth rotation assembly 104. The first pressing plate swing arm 63 is slidably connected to the first pressing plate 61 and is rotatably and slidably connected to the fixed base 10. The second pressing plate swing arm 64 is slidably connected to the second pressing plate 62 and is rotatably and slidably connected to the fixed base 10.

The first pressing plate 61 includes a first pressing plate body 611 and a first slide block 612. The first pressing plate body 611 is in a strip-shaped plate-like structure. A first pressing plate slide groove 613 is disposed in the first pressing plate body 611, and the first pressing plate slide groove 613 penetrates the first pressing plate body 611 in a width direction of the first pressing plate body 611. In this embodiment, there are four first pressing plate slide grooves 613, and the four first pressing plate slide grooves 613 are sequentially arranged apart in the Y direction. In another embodiment, there may alternatively be one first pressing plate slide groove 613, two first pressing plate slide grooves 613, three first pressing plate slide grooves 613, or at least five first pressing plate slide grooves 613. The first pressing plate slide groove 613 is configured to mount the first pressing plate swing arm 63. The first slide block 612 is disposed on a bottom surface of the first pressing plate body 611 and is fastened to the first pressing plate body 611. In this embodiment, there are a plurality of first slide blocks 612, and the plurality of first slide blocks 612 are sequentially arranged apart in the Y direction. Each first slide block 612 extends in an arc shape from the bottom surface of the first pressing plate body 611 in a direction away from a top surface. A structure of the first slide block 612 is adapted to the structure of the first guide groove 215.

A structure of the second pressing plate 62 is approximately the same as the structure of the first pressing plate 61. The second pressing plate 62 includes a second pressing plate body 621 and a second slide block 622. A second pressing plate slide groove 623 is disposed in the second pressing plate body 621. The second pressing plate slide groove 623 is configured to mount the second pressing plate swing arm 64. The second slide block 622 is disposed on a bottom surface of the second pressing plate body 621 and extends in an arc shape from the bottom surface of the second pressing plate body 621 in a direction away from a top surface. A structure of the second slide block 622 is adapted to the structure of the second guide groove 225.

The first pressing plate swing arm 63 includes a first pressing plate swing body 631 and a first pressing plate rotation body 632. The first pressing plate rotation body 632 is in an arc-shaped plate-like structure. The first pressing plate rotation body 632 includes a first rotation part 6321 and two second rotation parts 6322. The two second rotation parts 6322 are respectively located on two opposite sides of the first pressing plate rotation body 632 in the X direction, and the first rotation part 6321 is located between the two second rotation parts 6322. A structure of the first pressing plate rotation body 632 matches the structure of the third rotation groove 125, a structure of the first rotation part 6321 matches a structure of the fifth slide rail 1251, and a structure of the second rotation part 6322 matches a structure of the sixth slide rail 1252. The first pressing plate swing body 631 is in a plate-like structure, and one end of the first pressing plate swing body 631 is fastened to the first pressing plate rotation body 632. The first pressing plate swing arm 63 is mounted in the third rotation groove 125 and is configured to be rotatably and slidably connected to the fixed base 10 and slidably connected to the first fastening plate 21.

A structure of the second pressing plate swing arm 64 is the same as the structure of the first pressing plate swing arm 63. The second pressing plate swing arm 64 includes a second pressing plate rotation body 641 and a second pressing plate swing body 642. A third rotation part 6421 and two fourth rotation parts 6422 are disposed on the second pressing plate rotation body 641. A structure of the second pressing plate rotation body 641 is the same as the structure of the first pressing plate rotation body 632, and a structure of the second pressing plate swing body 642 is the same as the structure of the first pressing plate swing body 631. The second pressing plate swing arm 64 is mounted in the fourth rotation groove 126 of the fixed base 10 and is configured to be rotatably and slidably connected to the fixed base 10 and slidably connected to the second fastening plate 22.

In this embodiment, there are four first pressing plate swing arms 63 and four second pressing plate swing arms 64. In another embodiment, there may alternatively be one first pressing plate swing arm 63 and one second pressing plate swing arm 64, two first pressing plate swing arms 63 and two second pressing plate swing arms 64, three first pressing plate swing arms 63 and three second pressing plate swing arms 64, or at least five first pressing plate swing arms 63 and at least five second pressing plate swing arms 64.

To understand assembling relationships between the pressing plate assembly 3 and other components more clearly, with reference to FIG. 5 and FIG. 6, the first pressing plate 61 and the first pressing plate swing arm 63 are located on a same side of the fixed base 10 in the X direction, and the four first pressing plate swing arms 63 are arranged apart in the Y direction. The first pressing plate rotation body 632 is mounted in the third rotation groove 125 of the fixed base 10, the first rotation part 6321 is mounted in the fifth slide rail 1251, and the second rotation part 6322 is mounted in the sixth slide rail 1252. The first pressing plate rotation body 632 can slide and rotate in the third rotation groove 125 along the fifth slide rail 1251 and the sixth slide rail 1252. One end that is of the first pressing plate swing body 631 and that faces away from the first pressing plate rotation body 632 is mounted in the first pressing plate slide groove 613, and each first pressing plate swing body 631 can slide in a corresponding first pressing plate slide groove 613. The first pressing plate 61 is slidably and rotatably connected to the first fastening plate 21. The first slide block 612 of the first pressing plate 61 is mounted in the first guide groove 215 of the first fastening plate 21, and each first slide block 612 can slide in a corresponding first guide groove 215.

When rotating, the first housing 210 drives the first fastening plate 21 to rotate relative to the fixed base 10, to drive the first pressing plate 61 to rotate relative to the fixed base 10, and enable the first slide block 612 to slide in an arc shape in the corresponding first guide groove 215, to drive the first pressing plate 61 to slide in an arc shape relative to the first fastening plate 21. In addition, when rotating, the first pressing plate 61 drives the first pressing plate swing body 631 to rotate, to drive the first pressing plate rotation body 632 to slide and rotate in the first slide groove 214, so that the first pressing plate 61 and the first pressing plate swing arm 63 rotate relative to the fixed base 10.

The second pressing plate 62 and the second pressing plate swing arm 64 are located on the other side of the fixed base 10 in the X direction, and the four second pressing plate swing arms 64 are arranged apart in the Y direction. The second pressing plate rotation body 641 is mounted in the fourth rotation groove 126 of the fixed base 10, the third rotation part 6421 is mounted in the seventh slide rail 1261, and the fourth rotation part 6422 is mounted in the eighth slide rail 1262. The second pressing plate rotation body 641 can slide and rotate in the second rotation groove 124 along the seventh slide rail 1261 and the eighth slide rail 1262. One end that is of the second pressing plate swing body 642 and that faces away from the second pressing plate rotation body 641 is mounted in the second pressing plate slide groove 623, and each second pressing plate swing body 642 can slide in a corresponding second pressing plate slide groove 623. The second pressing plate 62 is slidably and rotatably connected to the second fastening plate 22. The second slide block 622 of the second pressing plate 62 is mounted in the second guide groove 225 of the second fastening plate 22, and each second slide block 622 can slide in a corresponding second guide groove 225.

When rotating, the second housing 220 drives the second fastening plate 22 to rotate relative to the fixed base 10, to drive the second pressing plate 62 to rotate relative to the fixed base 10, and enable the second slide block 622 to slide in an arc shape in the corresponding second guide groove 225, to drive the second pressing plate 62 to slide in an arc shape relative to the second fastening plate 22. In addition, when rotating, the second pressing plate 62 drives the second pressing plate swing body 642 to rotate, to drive the second pressing plate rotation body 641 to slide and rotate in the second slide groove 224, so that the second pressing plate 62 and the second pressing plate swing arm 64 rotate relative to the fixed base 10.

Both the first pressing plate 61 and the second pressing plate 62 are disposed opposite to the display screen 300. The first pressing plate 61 and the second pressing plate 62 jointly support the display screen 300, so that connection stability of the display screen 300 can be improved, thereby ensuring good display of the display screen 300.

In this embodiment, the first housing 210 drives the first fastening plate 21 to rotate, to drive the first pressing plate 61 to rotate, and the second housing 220 drives the second fastening plate 22 to rotate, to drive the second pressing plate 62 to rotate, so that the foldable electronic device 500 switches between the folded state and the flattened state, thereby implementing folding and unfolding of the display screen 300. In addition, in this embodiment, the first pressing plate 61 can slide in the arc shape relative to the first fastening plate 21, and the second pressing plate 62 can slide in the arc shape related to the second fastening plate 22, so that an angle between the first pressing plate 61 and the second pressing plate 62 can be adjusted, to adapt to a folding angle of the foldable part 330 of the display screen 300, thereby preventing the first pressing plate 61 and the second pressing plate 62 from squeezing the display screen 300 when the rotating mechanism 100 is in the folded state. To be specific, when the rotating mechanism 100 is in the folded state, an angle between the first fastening plate 21 and the second fastening plate 22 is different from the angle between the first pressing plate 61 and the second pressing plate 62, and the angle between the first pressing plate 61 and the second pressing plate 62 can be adjusted based on a bending angle of the display screen 300, to adapt to bending of the display screen 300.

In this embodiment, the first pressing plate swing arm 63 is disposed, and the first pressing plate 61 drives the first pressing plate swing arm 63 to rotate, to implement rotation of the first pressing plate 61 relative to the fixed base 10, thereby improving rotation stability of the first pressing plate 61. The second pressing plate swing arm 64 is disposed, and the second pressing plate 62 drives the second pressing plate swing arm 64 to rotate, to implement rotation of the second pressing plate 62 relative to the fixed base 10, thereby improving rotation stability of the second pressing plate 62.

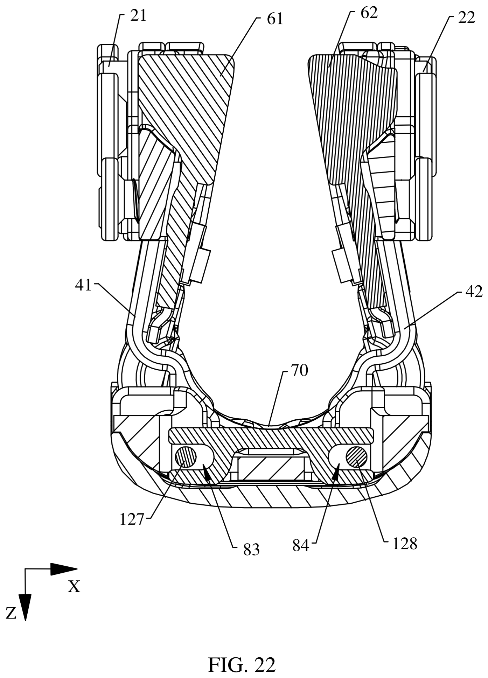

Referring to FIG. 5 and FIG. 22, FIG. 22 is a cross-section view of the rotating mechanism 100 shown in FIG. 5 in the folded state.

The flexible support member 70 is in a strip-shaped plate-like structure, and the flexible support member 70 can bend in the Y direction. The flexible support member 70 is mounted in the fixed base 10 and is disposed opposite to the upper housing 12 in the Z direction. When the rotating mechanism 100 is in the flattened state, the flexible support member 70, the first pressing plate 61, and the second pressing plate 62 jointly support the display screen 300, to ensure good display of the display screen 300. When the rotating mechanism 100 is in the folded state, the foldable part 330 of the display screen 300 bends and protrudes toward the flexible support member 70, the flexible support member 70 bends and forms a water-drop-shaped structure, and a middle part of the flexible support member 70 sinks toward the inside of the fixed base 10 and forms an avoidance space, to avoid the display screen 300, to prevent the flexible support member 70 from squeezing the display screen 300, causing damage to the display screen 300.

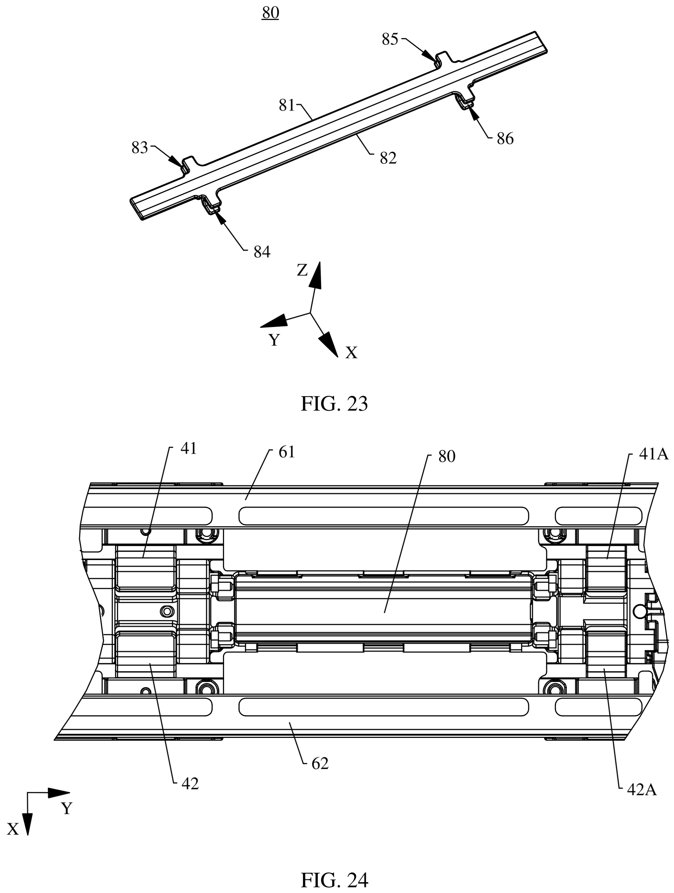

Referring to FIG. 23 and FIG. 24, FIG. 23 is a schematic diagram of an enlarged structure of the floating plate 80 in the rotating mechanism 100 shown in FIG. 6, and FIG. 24 is a schematic diagram of a partial structure of the rotating mechanism 100 shown in FIG. 5.

The floating plate 80 is in a strip-shaped plate-like structure. The floating plate 80 includes a first side 81 and a second side 82. The first side 81 and the second side 82 are disposed opposite to each other and are respectively located on two opposite sides of the floating plate 80 in the X direction. A first mounting groove 83, a second mounting groove 84, a third mounting groove 85, and a fourth mounting groove 86 are disposed in the floating plate 80. The first mounting groove 83 and the third mounting groove 85 are disposed on the first side 81, and the second mounting groove 84 and the fourth mounting groove 86 are disposed on the second side 82. In addition, the first mounting groove 83 is disposed opposite to the second mounting groove 84 in the X direction, and the third mounting groove 85 is disposed opposite to the fourth mounting groove 86 in the X direction. The first mounting groove 83, the second mounting groove 84, the third mounting groove 85, and the fourth mounting groove 86 are U-shaped through grooves. The first mounting groove 83 is used as an example. The first mounting groove 83 includes two groove walls, the two groove walls are disposed opposite to each other to form a U-shaped through groove, and a groove opening faces away from a center line position in a length direction of the floating plate 80.

The floating plate 80 is located between the fixed base 10 and the flexible support member 70 and is mounted between the first sub-housing 12A and the second sub-housing 12B. An FPC (flexible circuit board) of the foldable electronic device 500 can further pass between the first sub-housing 12A and the second sub-housing 12B. The FPC herein is a structure configured to electrically connect an electronic component located in the first housing 210 and an electronic component located in the second housing 220 in the foldable electronic device 500. To be specific, the floating plate 80 is mounted in the fixed base 10 and is opposite to an FPC cable position. The first extension part 1272 of the first rotation shaft 127 in the first sub-housing 12A is located in the first mounting groove 83, the second extension part 1282 of the second rotation shaft 128 in the first sub-housing 12A is located in the second mounting groove 84, the first rotation shaft 127 in the second sub-housing 12B is located in the third mounting groove 85, and the second rotation shaft 128 in the second sub-housing 12B is located in the second mounting groove 84.

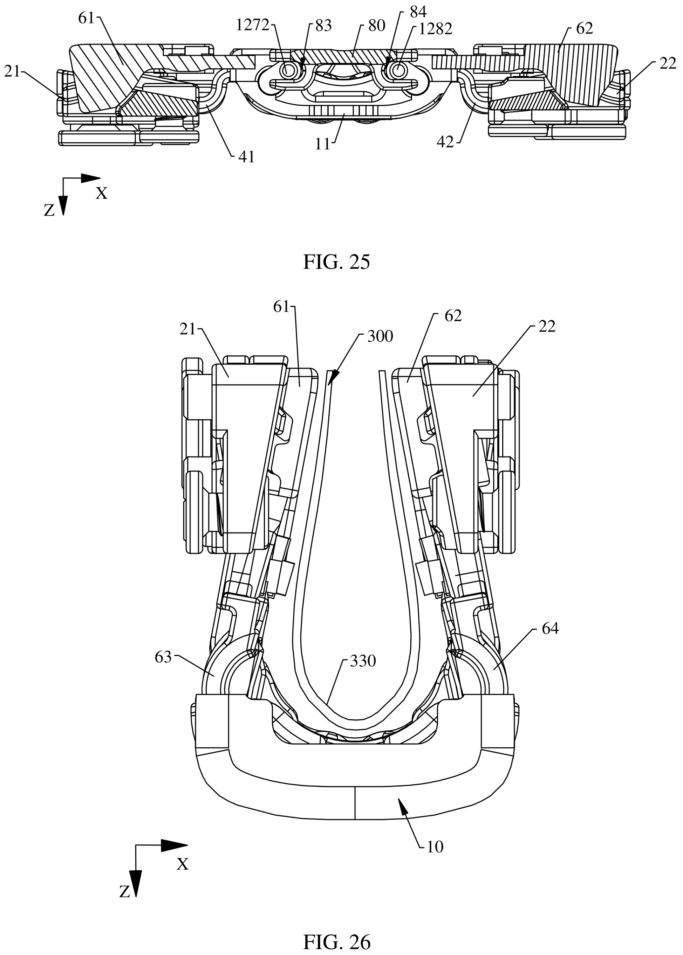

Referring to FIG. 22 and FIG. 25 together, FIG. 25 is a schematic diagram of a cross-section structure of the rotating mechanism 100 shown in FIG. 5 in the flattened state.

When the rotating mechanism 100 rotates from the flattened state to the folded state, the first auxiliary swing arm 41 and the second auxiliary swing arm 42 rotate in a direction close to each other. The first auxiliary swing arm 41 drives the first rotation shaft 127 to rotate, to drive the first extension part 1272 to rotate in a direction close to the lower housing 11, and the second auxiliary swing arm 42 drives the second rotation shaft 128 to rotate, to drive the second extension part 1282 to rotate toward the lower housing 11. The first extension part 1272 and the second extension part 1282 rotate toward the lower housing 11, to drive the floating plate 80 to move in a Z-axis negative direction, in other words, drive the floating plate 80 to move in a direction away from the display screen 300, to provide an avoidance space for bending of the flexible support member 70 and the display screen 300, thereby preventing the floating plate 80 from squeezing the flexible support member 70 and the display screen 300, causing damage to the display screen 300.

When the rotating mechanism 100 rotates from the folded state to the flattened state, the first auxiliary swing arm 41 and the second auxiliary swing arm 42 rotate in a direction away from each other. The first auxiliary swing arm 41 drives the first rotation shaft 127 to rotate, to drive the first extension part 1272 to rotate in a direction away from the lower housing 11, and the second auxiliary swing arm 42 drives the second rotation shaft 128 to rotate, to drive the second extension part 1282 to rotate in a direction away from the lower housing 11. The first extension part 1272 and the second extension part 1282 rotate in the directions away from the lower housing 11, to drive the floating plate 80 to move in a Z-axis positive direction, in other words, drive the floating plate 80 to move in a direction close to the display screen 300, so that the rotating mechanism 100 is in the flattened state.

When the rotating mechanism 100 is in the flattened state, the first auxiliary swing arm 41 and the second auxiliary swing arm 42 in the first rotation assembly 101 unfold relative to the fixed base 10, and the first auxiliary swing arm 41 and the second auxiliary swing arm 42 in the second rotation assembly 102 unfold relative to the fixed base 10. The floating plate 80 and the flexible support member 70 jointly support the display screen 300.

In this embodiment, the floating plate 80 is disposed at the FPC cable position of the rotating mechanism 100, so that an FPC cable can be protected, to prevent the flexible support member 70 and the display screen 300 from squeezing the FPC cable when the rotating mechanism 100 is in the folded state, causing damage to the FPC cable. In addition, when the rotating mechanism 100 is in the flattened state, the floating plate 80 and the flexible support member 70 jointly support the display screen 300. When the rotating mechanism 100 is in the folded state, the floating plate 80 sinks, to avoid the flexible support member 70 and the display screen 300, to prevent the display screen 300 from being squeezed.

Referring to FIG. 26, FIG. 26 is a schematic diagram of a structure of the rotating mechanism 100 shown in FIG. 5 in the folded state.

When the rotating mechanism 100 is in the folded state, the foldable part 330 of the display screen 300 is located inside the rotating mechanism 100. Specifically, the foldable part 330 is located in an avoidance space. For example, the avoidance space is approximately in a "water drop" shape. In this case, the rotating mechanism 100 can avoid an R angle formed when the foldable part 330 bends, so that the foldable part 330 does not bend at a relatively large angle, to avoid undesirable phenomena such as a crease on the display screen 300, thereby helping prolong a service life of the display screen 300.

The foregoing descriptions are merely some embodiments and implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A rotating mechanism, comprising a fixed base, a first main swing arm, a second main swing arm, a first fastening plate, and a second fastening plate, wherein
the first fastening plate and the second fastening plate are respectively located on the two opposite sides of the fixed base in the width direction;
a first rotation groove and a second rotation groove are disposed in the fixed base, and the first rotation groove is disposed opposite to the second rotation groove, the first rotation groove comprises a first slide rail and two second slide rails, and the two second slide rails are respectively located on two opposite sides of the first slide rail and are disposed side by side with the first slide rail in a length direction of the fixed base; and
the first main swing arm is mounted in the first rotation groove and is slidable and rotatable along the first rotation groove, and the first main swing arm is rotatably connected to the first fastening plate; and the second main swing arm is mounted in the second rotation groove and is slidable and rotatable along the second rotation groove, and the second main swing arm is rotatably connected to the second fastening plate.

2. The rotating mechanism according to claim 1, wherein the first main swing arm comprises a first rotation body and a first swing body, the first rotation body is fastened to the first swing body, the first rotation body comprises a first slide part and two second slide parts, and the two second slide parts are connected to two opposite sides of the first slide part;
the first rotation body is mounted in the first rotation groove, the first slide part is mounted in the first slide rail, and one second slide part is mounted in one second slide rail.

3. The rotating mechanism according to claim 2, wherein one second slide rail comprises a slide rail bottom wall and a bump, the bump is connected to a side wall of the first rotation groove and is disposed opposite to and apart from the slide rail bottom wall, a first hollow part is further disposed on a bottom wall of the first rotation groove, and the first hollow part penetrates the bottom wall of the first rotation groove and is disposed opposite to the bump; and the second slide part is located between the slide rail bottom wall and the bump.

4. The rotating mechanism according to any one of claims 1 to 3, wherein a first rotation shaft and a second rotation shaft are further mounted in the fixed base, the first rotation shaft and the second rotation shaft are disposed opposite to and parallel to each other and are rotatably connected to the fixed base, and both extension directions of the first rotation shaft and the second rotation shaft are parallel to the length direction of the fixed base; and
the rotating mechanism comprises a first auxiliary swing arm and a second auxiliary swing arm, and the first auxiliary swing arm is fastened to the first rotation shaft and is slidably connected to the first fastening plate; and the second auxiliary swing arm is fastened to the second rotation shaft and is slidably connected to the second fastening plate.

5. The rotating mechanism according to claim 4, wherein the rotating mechanism further comprises a floating plate, and the floating plate is mounted in the fixed base and is rotatably connected to the first rotation shaft and the second rotation shaft; and when rotating relative to the fixed base, the first auxiliary swing arm drives the first rotation shaft to rotate, when rotating relative to the fixed base, the second auxiliary swing arm drives the second rotation shaft to rotate, and the first rotation shaft and the second rotation shaft rotate, to drive the floating plate to move in a thickness direction of the fixed base.

6. The rotating mechanism according to claim 5, wherein the rotating mechanism further comprises a flexible support member, the floating plate is located between the fixed base and the flexible support member.

7. The rotating mechanism according to claim 5 or 6, wherein the first rotation shaft comprises a first fastening part and a first extension part, and an axis of the first fastening part is disposed parallel to and apart from an axis of the first extension part; the second rotation shaft comprises a second fastening part and a second extension part, and an axis of the second fastening part is disposed parallel to and apart from an axis of the second extension part; and a first mounting groove and a second mounting groove are disposed in the floating plate, and the first mounting groove is disposed apart from the second mounting groove;
the first extension part is located in the first mounting groove, and the second extension part is located in the second mounting groove; and
when the first auxiliary swing arm and the second auxiliary swing arm rotate in a direction close to each other, the first extension part and the second extension part drive the floating plate to move toward the fixed base; and when the first auxiliary swing arm and the second auxiliary swing arm rotate in a direction away from each other, the first extension part and the second extension part drive the floating plate to move in a direction away from the fixed base.

8. The rotating mechanism according to any one of claims 1 to 7, wherein the rotating mechanism further comprises a first synchronization swing arm, a second synchronization swing arm, a synchronization gear, a first rotation lever, and a second rotation lever, wherein
the synchronization gear comprises a first gear, a second gear, and an intermediate gear, the first gear, the intermediate gear, and the second gear are all helical gears, the first gear, the intermediate gear, and the second gear are disposed side by side and in parallel, and the intermediate gear is located between the first gear and the second gear and engages with the first gear and the second gear;
the first synchronization swing arm is fastened to the first rotation lever, the first rotation lever is fastened to the first gear, and the second synchronization swing arm is fastened to the second rotation lever, the second rotation lever is fastened to the second gear; and
the first synchronization swing arm and the second synchronization swing arm are respectively located on two opposite sides of the fixed base in a width direction, a rotation direction of the first synchronization swing arm is opposite to a rotation direction of the second synchronization swing arm, and a rotation direction of the first gear is opposite to a rotation direction of the second gear.

9. The rotating mechanism according to claim 8, wherein a contact ratio between the intermediate gear and the first gear is greater than 1.2, and a contact ratio between the intermediate gear and the second gear is greater than 1.2.

10. The rotating mechanism according to claim 8 or 9, wherein the intermediate gear comprises a third gear and a fourth gear, both the third gear and the fourth gear are helical gears, both the third gear and the fourth gear are disposed between the first gear and the second gear, the third gear engages with the first gear, and the fourth gear engages with the second gear and the third gear.

11. The rotating mechanism according to claim 10, wherein the first gear comprises first teeth, the second gear comprises second teeth, the third gear comprises third teeth, and the fourth gear comprises fourth teeth; and the first teeth, the second teeth, the third teeth, and the fourth teeth are all helical, a helical direction of the first tooth is opposite to a helical direction of the second tooth, and a helical direction of the third teeth is opposite to a helical direction of the fourth teeth.

12. The rotating mechanism according to claim 10, wherein the first gear comprises first teeth, the second gear comprises second teeth, the third gear comprises third teeth, and the fourth gear comprises fourth teeth; and the first teeth, the second teeth, the third teeth, and the fourth teeth are all "V"-shaped.

13. The rotating mechanism according to claim 12, wherein the first tooth comprises a first sub-teeth and a second sub-teeth, both the first sub-teeth and the second sub-teeth are helical teeth, and the first sub-teeth is fastened to the second sub-teeth in an axial direction of the first gear; the second teeth comprises a third sub-teeth and a fourth sub-teeth, both the third sub-teeth and the fourth sub-teeth are helical teeth, and the third sub-teeth is fastened to the fourth sub-teeth in an axial direction of the second gear; the third teeth comprises a fifth sub-teeth and a sixth sub-teeth, both the fifth sub-teeth and the sixth sub-teeth are helical teeth, and the fifth sub-teeth is fastened to the sixth sub-teeth in an axial direction of the third gear; and the fourth teeth comprises a seventh sub-teeth and an eighth sub-teeth, both the seventh sub-teeth and the eighth sub-teeth are helical teeth, and the seventh sub-teeth is fastened to the eighth sub-teeth in an axial direction of the fourth gear; and
the first sub-teeth engages with the fifth sub-teeth, the fifth sub-teeth engages with the seventh sub-teeth, and the seventh sub-teeth engages with the third sub-teeth; and the second sub-teeth engages with the sixth sub-teeth, the sixth sub-teeth engages with the eighth sub-teeth, and the eighth sub-teeth engages with the fourth sub-teeth.

14. The rotating mechanism according to any one of claims 1 to 13, wherein the rotating mechanism further comprises a first pressing plate, a second pressing plate, a first pressing plate swing arm and a second pressing plate swing arm;
the first pressing plate is slidably and rotatably connected to the first fastening plate, and when rotating relative to the fixed base, the first fastening plate drives the first pressing plate to rotate relative to the fixed base; and the second pressing plate is slidably and rotatably connected to the second fastening plate, and when rotating relative to the fixed base, the second fastening plate drives the second pressing plate to rotate relative to the fixed base;
a third rotation groove and a fourth rotation groove are further disposed in the fixed base, and the third rotation groove is disposed opposite to the fourth rotation groove, the third rotation groove comprises a fifth slide rail and two sixth slide rails, and the two sixth slide rails are respectively located on two opposite sides of the fifth slide rail and are disposed side by side with the fifth slide rail in a length direction of the fixed base; and
the first pressing plate swing arm is mounted in the third rotation groove and is slidable and rotatable along the third rotation groove, and the first pressing plate swing arm is slidably connected to the first pressing plate; and the second pressing plate swing arm is mounted in the fourth rotation groove and is slidable and rotatable along the fourth rotation groove, and the second pressing plate swing arm is slidably connected to the second pressing plate.

15. A foldable electronic device, comprising a first housing, a second housing, a display screen, and the rotating mechanism according to any one of claims 1 to 14, the rotating mechanism is connected between the first housing and the second housing, the display screen is mounted on the first housing, the second housing, and the rotating mechanism, and when the rotating mechanism rotates, the first housing and the second housing rotate relative to each other, to drive the display screen to bend or unfold.
